# EUROPEAN PATENT SPECIFICATION

(11) **EP 2 436 570 B1**
(45) Date of publication and mention of the grant of the patent: **08.03.2017**
(21) Application number: 10811465.3
(22) Date of filing: 17.08.2010
(51) Int. Cl.: B60T 15/36, B60T 13/66, B60T 15/18

(54) **BRAKE PRESSURE CONTROL VALVE AND BRAKE CONTROL DEVICE**
BREMSENDRUCKSTEUERUNGSVENTIL UND BREMSENSTEUERUNGSVORRICHTUNG
SOUPAPE DE COMMANDE DE LA PRESSION DE FREINAGE ET DISPOSITIF DE COMMANDE DU FREINAGE

(30) Priority: 24.08.2009 JP 2009193317; 24.08.2009 JP 2009193422
(43) Date of publication of application: 04.04.2012
(73) Proprietor: Nabtesco Corporation, Tokyo 102-0093 (JP)
(72) Inventor: YAMANAKA, Masatami, Kobe-shi Hyogo 651-2271 (JP); KAJIWARA, Fumihiro, Kobe-shi Hyogo 651-2271 (JP)
(74) Representative: Müller-Boré & Partner Patentanwälte PartG mbB
(86) International application number: PCT/JP2010/005084
(87) International publication number: WO 2011/024406

(56) References cited:
- GB-A- 2 227 063
- JP-A- 2006 168 664
- JP-A- 2006 168 664
- JP-A- 2007 106 287
- JP-U- H03 118 166
- US-A- 4 571 008

## Description

### Technical Field

The present invention relates to a brake pressure control valve and a brake control device.

### Background Art

There is known a conventional brake control device disclosed in Patent Document 1, which has a variable load valve and relay valves stored in a casing. In the casing of the brake control device disclosed in this patent document, two blocks configuring the relay valves (relay valve blocks) are disposed on a block configuring the variable load valve (variable load valve block), and these blocks are compactly stored in the casing.

On the other hand, there is also known a brake control device disclosed in Patent Document 2, which has an antiskid valve for preventing a wheel from sliding. The antiskid valve disclosed in Patent Document 2 is configured by a solenoid valve and a control valve, wherein the solenoid valve is activated in response to a control signal. The control valve has a control chamber linked to a throttle part provided in the solenoid valve, and an output chamber communicated with a brake cylinder. Once sliding of the wheel is detected, the antiskid valve supplies pressure fluid to the control chamber of the control valve on the basis of a slide detection signal, which is the control signal. As a result, the pressure fluid of the output chamber communicated with the brake cylinder is discharged, weakening brake force. When the brake is not released, the brake control device forcibly opens and activates the antiskid valve on the basis of a forced release command. This also weakens the brake force.

The brake control device of Patent Document 1 described above has the relay valve blocks placed on the variable load valve block. For this reason, the blocks need to be placed so as not to interfere with each other, and each of the blocks needs to have a section where tightening bolts or other attachment members are provided. These factors inhibit downsizing of the brake control device.

The antiskid valve disclosed in Patent Document 2 is formed on the outside of the brake control device separately from a variable load valve or a relay valve. Adding this antiskid valve to the brake control device increases the size of the brake control device.

Patent Document 1: Japanese Patent Application Publication No. 2007-106287
Patent Document 2: Japanese Unexamined Utility Model Application Publication No. H3-118166
The document JP 2006-168 664 A discloses a brake control device, in which the variable load valve is arranged between the relay valves and in particular between the adjacent diaphragms. Further, the variable load valve is oriented parallel to the relay valves.

### Summary of the Invention

The present invention was contrived in view of these conventional brake pressure control valves, and an object of the present invention is to provide a brake pressure control valve that contributes to downsizing of a brake control device.

This object is solved by a brake pressure control valve according to independent claim 1.

### Brief Description of the Drawings

[Fig. 1] Fig. 1 is a perspective view showing the entire configuration of a brake control device according to an embodiment of the present invention.
[Fig. 2] Fig. 2 is a diagram of the brake control device without a lid, viewed from the front.
[Fig. 3] Fig. 3 is a cross-sectional diagram of the inside of a casing viewed from the left side.
[Fig. 4] Figs. 4A and 4B are diagrams each illustrating how a wiring board and control boards are disposed.
[Fig. 5] Fig. 5A is a front side view of an attachment frame body, Fig. 5B is a bottom view of the attachment frame body, and Fig. 5C is a right side view of the attachment frame body.
[Fig. 6] Fig. 6A is a diagram of a case main body viewed from the front, and Fig. 6B is a cross-sectional diagram of the case main body viewed from the right side.
[Fig. 7] Fig. 7 is a diagram showing the entire configuration of a compressed air circuit.
[Fig. 8] Fig. 8 is a front side view of a block.
[Fig. 9] Fig. 9 is a cross-sectional diagram of the inside of the block viewed from the front.
[Fig. 10] Fig. 10 is a cross-sectional diagram of the inside of the block viewed from the right side.
[Fig. 11] Fig. 11 is a cross-sectional diagram of the inside of the block viewed from above.

### Embodiments for Carrying Out the Invention

An embodiment of the present invention is described hereinafter in detail with reference to the drawings.

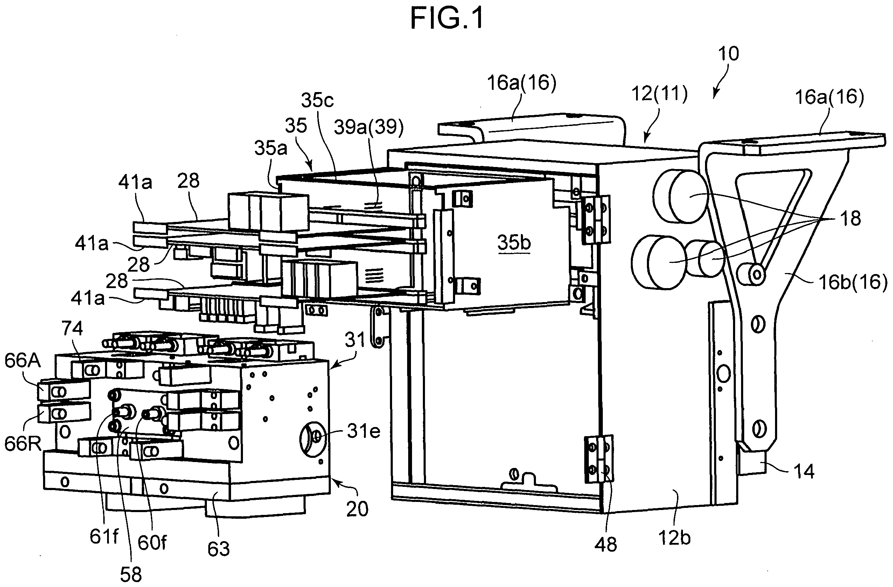

As shown in Figs. 1 to 3, a brake control device 10 according to the present embodiment has a rectangular box shaped casing 11. The inside of the casing 11 is formed as a storage space capable of storing a brake pressure control valve 20, control boards 28 and the like, which are described hereinafter. The casing 11 has a case main body 12 with an opened front surface, and a lid 13 capable of opening/closing the opening of the case main body 12.

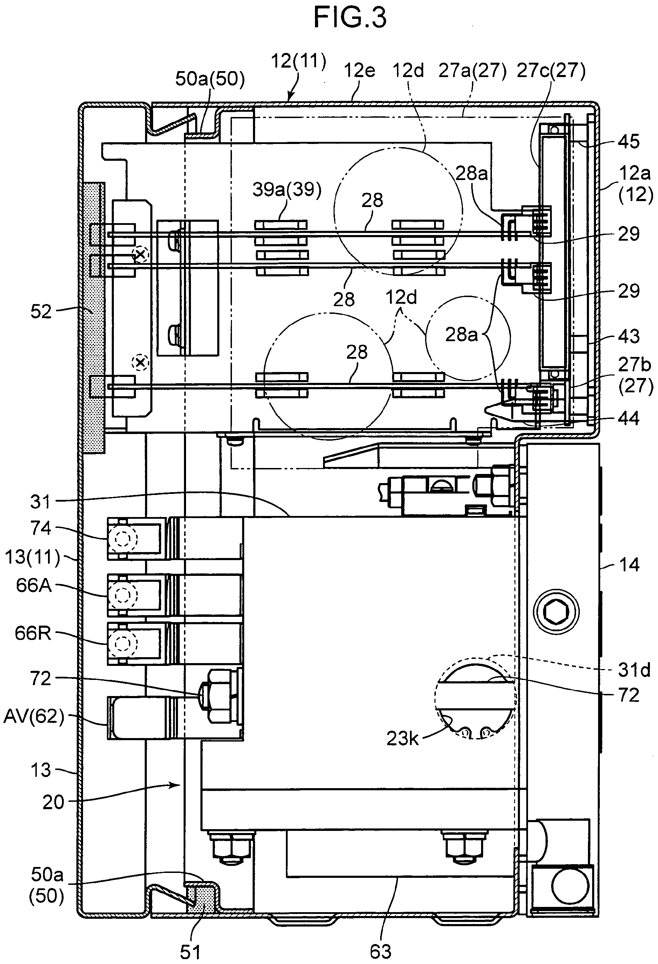

A back wall 12a configuring a side wall of the case main body 12 is formed to have a level difference, as shown in Fig. 3. An upper side of the level difference of the back wall 12a is formed so as to project rearward. A tube seat 14 is attached to a lower side of the level difference of the back wall 12a. A back surface (rear surface) of the tube seat 14 is substantially flush with an upper side part of the level difference on an outer surface (rear surface) of the back wall 12a of the case main body 12. Attaching the tube seat 14 to the back wall 12a forms an outline of the casing 11 into substantially a cuboid.

In the present specification, the term "front side" or "near side" means the side to which the case main body 12 is opened, that is, the side that faces a worker during a maintenance work. The term "back side" or "deep side" means the side opposite to the front side or the near side, that is, the tube seat 14 side in the case main body 12. Therefore, the front side and the back side are irrelevant to a longitudinal direction of a vehicle. The terms "left" and "right" mean the left-hand side and the right-hand side with respect to the front side (near side).

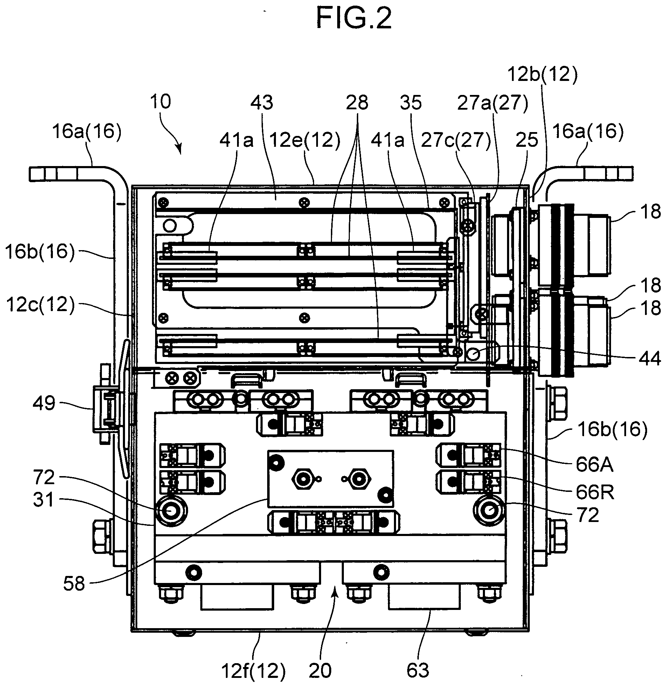

The casing 11 is provided with attachment mounts 16 that can be attached to a vehicle body (not shown) of the vehicle. As shown in Figs. 1 and 2, the attachment mounts 16 are provided on either side of the casing 11. Each of the attachment mounts 16 has a horizontal part 16a extending in a horizontal direction and a suspending part 16b extending downward from the horizontal part 16a, and is in an L-shape. The horizontal part 16a is joined to, for example, a lower surface of a trolley of the vehicle. An installation part, not shown, is provided between the suspending parts 16b of the attachment mounts 16, and the attachment mounts 16 are fixed to the casing 11 and the back surface of the tube seat 14 by this installation part.

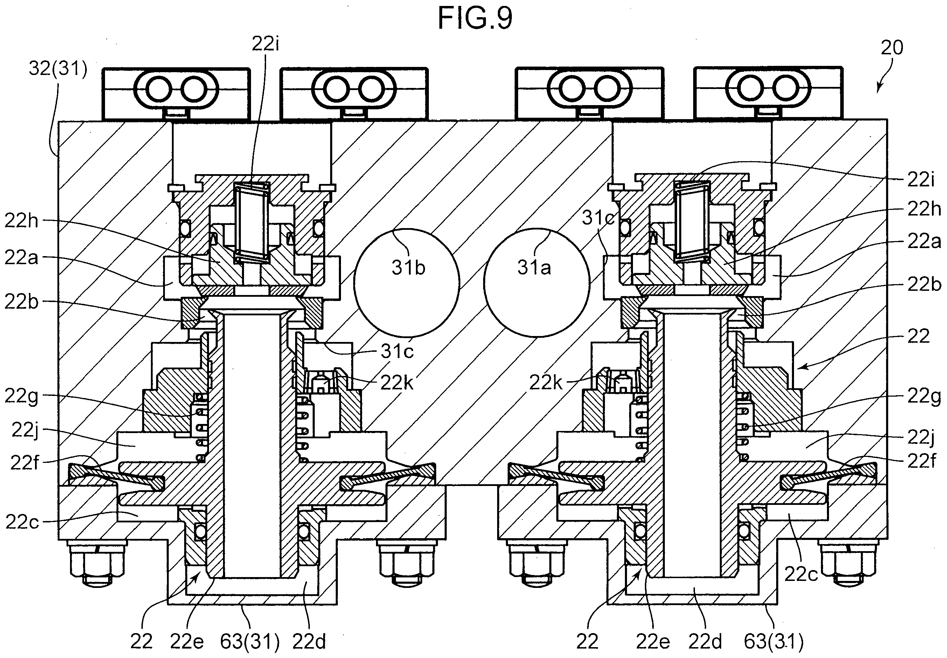

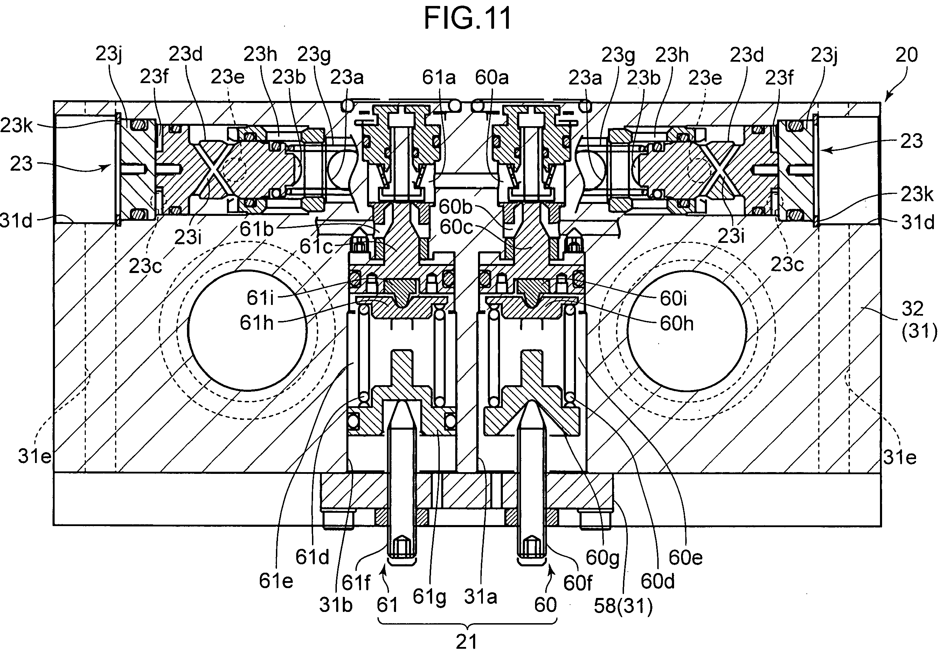

The tube seat 14 is a flat member having an air passage formed therein. The air passage connects, for example, a pipe for source pressure or the like introduced from the outside of the casing 11, to a variable load valve 21 (see Fig. 11), relay valves 22, 22 (see Fig. 9), forced open valves 23 (see Fig. 11) and the like, which are placed inside the casing 11.

As shown in Figs. 1 and 2, cannon connectors 18 are provided on a side wall of the casing 11 (case main body 12). More specifically, the cannon connectors 18 are attached to a right side wall 12b of a pair of side walls 12b, 12c extending in a vertical direction with respect to a near side opening of the case main body 12. Through-holes 12d are formed on this side wall 12b, as shown in Fig. 3, and the cannon connectors 18 are fixed to the casing 11 (case main body 12) through these through-holes 12d. Note that the cannon connectors 18 are connectors that have many connecting terminals so as to be connected to wires having signal lines and power lines. The cannon connectors 18 may not necessarily be round and may be polygonal. The diagrams show the cannon connectors 18 that are configured as receptacles to which wires having plugs can be connected. As shown in Fig. 2, the cannon connectors 18 are fixed to the case main body 12 by forming a connector attachment plate 25, which is provided integrally with the connectors 18, along an inner surface of the side wall 12b, and then screwing this connector attachment plate 25 to the side wall 12b of the case main body 12. Therefore, inner end parts of the cannon connectors 18 protrude from the inner surface of the side wall 12b.

The brake pressure control valve 20, a wiring board 27, the control boards 28, and connectors 29 are placed in the storage space of the casing 11.

The brake pressure control valve 20 is for adjusting brake pressure supplied to a brake cylinder, not shown, and has a substantially rectangular block 31. The variable load valve 21, the relay valves 22, and the forced open valves 23 are integrally provided in the block 31. The structures of the valves are described hereinafter in detail.

The block 31 of the brake pressure control valve 20 is provided in a lower part of the storage space and fixed to the tube seat 14 at this position. The wiring board 27 and the control boards 28 are disposed on an upper side of the block 31.

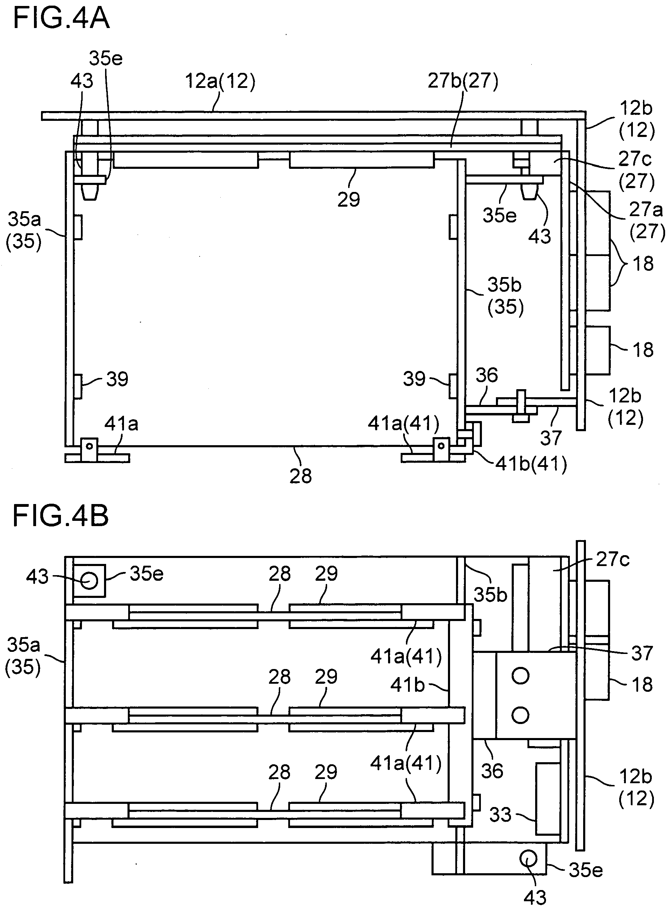

As shown in Figs. 4A and 4B, the wiring board 27 has a first board 27a along the right side wall 12b of the case main body 12, a second board 27b along the back wall 12a of the case main body 12, and a connecting part 27c for electrically connecting the first board 27a and the second board 27b to each other, and is formed into an L-shape as viewed in planar view. Inner side parts of the cannon connectors 18 are connected to the first board 27a. In other words, no wires are formed between the first board 27a and the cannon connectors 18, and the first board 27a is supported by the cannon connectors 18. Furthermore, the first board 27a is provided with a communication port 33. External wiring is connected to this communication port 33 during a maintenance work and the like. Note that Figs. 4A and 4B are frame formats for illustrating positional relationships of these members. Therefore, the shape of each member is not shown accurately.

The first board 27a electrically connects the connecting terminals of the cannon connectors 18 (not shown) to a connecting terminal of the connecting part 27c (not shown). The connecting terminal of the connecting part 27c is electrically connected to a connecting terminal of the second board 27b (not shown). Therefore, no wires are formed between the first board 27a and the second board 27b.

Note that the cannon connectors 18 can also be attached to the back wall 12a of the case main body 12. In this case, the wiring board 27 is formed into a flat plate and disposed along the back wall 12a. The wiring board 27 is connected to the cannon connectors 18 so as to be positioned in a predetermined position with respect to the back wall 12a of the case main body 12.

The second board 27b and the connecting part 27c are positioned immediately above the tube seat 14, as shown in Fig. 3. In other words, the second board 27b and the connecting part 27c are disposed above the level difference formed on the back wall 12a of the case main body 12, and behind a lower section of the level difference of the back wall 12a.

The control boards 28 are provided in plurality (three, in the present embodiment). The second board 27b is provided with the connectors 29 corresponding to the control boards 28 respectively. A connecting terminal 28a of each of the control boards 28 is electrically connected to the second board 27b via the corresponding connector 29. For this reason, no wires such as cables are formed between the second board 27b and each of the control boards 28. Note that the number of the control boards 28 is not limited.

The control boards 28 are arrayed in horizontal position with a vertical space therebetween. Power circuits are configured in the top control board 28. This control board 28 functions as a power board. The power circuits include a feed circuit for performing feed control on various solenoid valves or an axle speed sensor, a power circuit associated with a communication circuit or the communication port 33 communicated with another brake control device, a power circuit for a microcomputer circuit for performing brake control, and a power circuit for an FPGA circuit for performing brake control. These power circuits are placed in a single control board 28, and electronic components such as electrolyte capacitors are used in all of the power circuits, and the electronic components having the same operating life are often used. Therefore, even when there are many electronic components reaching the end of their lives during a maintenance work, it is highly likely that these components exist in a single control board 28. The term "operating life" used herein not only means the useful lives of the components, but also means their failure rates and mean-time-between-failures (MTBF). Furthermore, because the control board 28 having the power circuits configured therein is disposed at the top, heat generated in this power board rarely affects the other control boards 28. In the rest of the control boards 28, control circuits for controlling the solenoid valves such as the variable load valve 21, the relay valves 22, 22 and the forced open valves 23, and communication circuits, are configured.

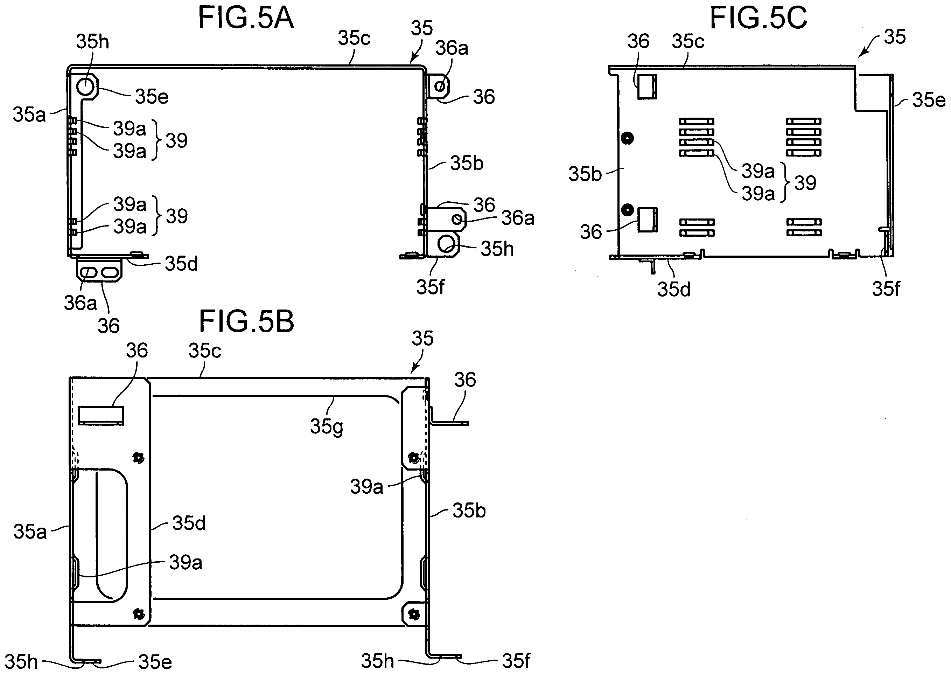

An attachment frame body 35 for retaining each of the control boards 28 is provided in the casing 11 (see Fig. 1). The attachment frame body 35 is a member obtained by processing a metal plate made of aluminum or the like. As shown in Figs. 5A to 5C, the attachment frame body 35 has a pair of left and right retaining walls 35a, 35b spreading perpendicularly, a rectangular upper surface part 35c that connects upper end parts of these retaining walls 35a, 35b to each other, a lower surface part 35d that project horizontally from a lower end part of the left retaining wall 35a, a first positioning part 35e that projects from a back end part of the left retaining wall 35a, and a second positioning part 35f that projects from a back end part of the right retaining wall 35b. A front-side (near-side) section and a back-side (deep-side) section of the attachment frame body 35 have openings through which the control board 28 can be inserted.

The upper surface part 35c is disposed along an upper wall 12e of the case main body 12. A large opening 35g is formed in this upper surface part 35c. The first positioning part 35e and the second positioning part 35f project rearward from the retaining walls 35a, 35b, respectively, and are bent at a right angle. Therefore, each of the positioning parts 35e, 35f is formed into an L-shape as viewed in planar view. The tips of the bent parts are parallel to the back wall 12a of the case main body 12 and have through-holes 35h formed thereon.

The attachment frame body 35 is detachable with respect to the casing 11. This is described hereinafter specifically. The right retaining wall 35a and the lower surface part 35d are provided with frame body side fixing parts 36 in which insertion holes 36a are punctured. The frame body side fixing part 36 provided in the right retaining wall 35b extends from the right retaining wall 35b to the right. In other words, because the attachment frame body 35 is placed on the left side of the storage space (away from the cannon connectors 18) in order to prevent the interference among the cannon connectors 18, the first board 27a and the connecting part 27c, a space is formed between the right retaining wall 35b and the right side wall 12b of the case main body 12. Therefore, the frame body side fixing parts 36 extend in this formed space.

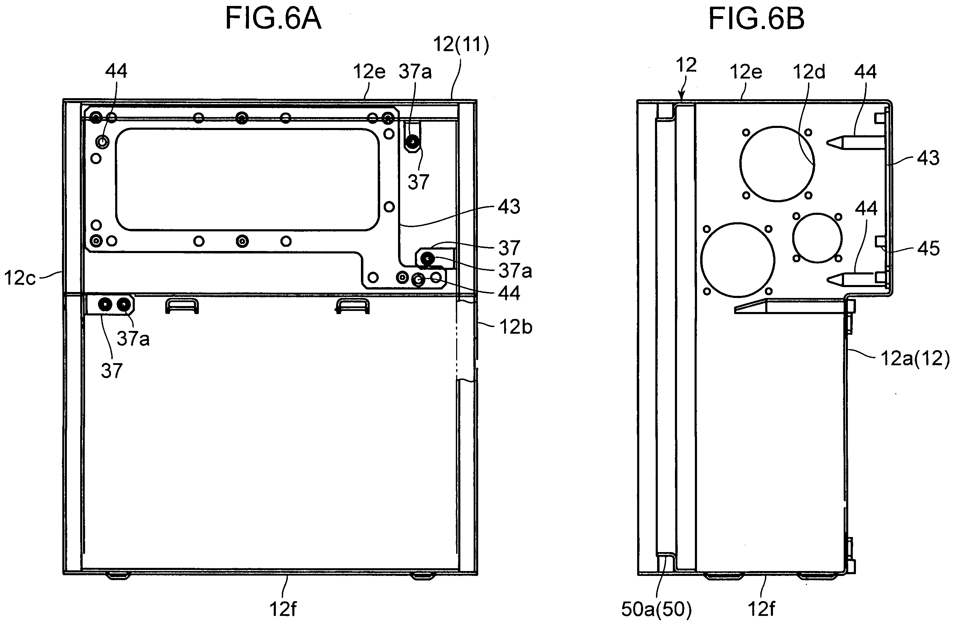

On the other hand, the case main body 12 is provided with case side fixing parts 37 corresponding to the frame body side fixing parts 36, as shown in Fig. 6A. One of the case side fixing parts 37 extends from the right side wall 12b of the case main body 12 to the left, whereas the other one extends from the left side wall 12c of the case main body 12 to the right. The case side fixing part 37 of the right side wall 12b is provided in a position corresponding to the frame body side fixing part 36 of the right retaining wall 35a, and the case side fixing part 37 of the left side wall 12c is provided in a position corresponding to the frame body side fixing part 36 of the lower surface part 35d.

The case side fixing parts 37 also have insertion holes 37a formed therein. The frame body side fixing parts 36 and the case side fixing parts 37 can be joined to each other by superposing the frame body side fixing parts 36 and the case side fixing parts 37 together and inserting bolts into the insertion holes 36a, 37a. The frame body side fixing parts 36 and the case side fixing parts 37 configure a fixing part for fixing the attachment frame body 35 to the casing 11. One of the insertion holes 36a of the case side fixing parts 37 and the frame body side fixing parts 36 has somewhat loose shapes and sizes so as to be able to join the fixing parts 36, 37 to each other, in a state in which the control boards 28, retained by the attachment frame body 35, are connected to the connectors 29.

The joint between the frame body side fixing parts 36 and the case side fixing parts 37 can be released by removing the bolts. Consequently, the attachment frame body 35 can be removed from the case main body 12. Note that the insertion holes 36a or the insertion holes 37a may be formed as screw holes into which the bolts can be screwed, or the bolts may also be tightened using nuts. In addition, the frame body side fixing parts 36 and the case side fixing parts 37 may be formed into shapes so that they can be fitted to each other.

As shown in Fig. 5, the retaining walls 35a, 35b of the attachment frame body 35 are provided with retaining parts 39 for retaining the control boards 28. In the present embodiment, three retaining parts 39 are provided because the three control boards 28 are used. These retaining parts 39 are obtained by cutting the sections corresponding to the left and right retaining walls 35a, 35b to allow them to project inward, and each have a pair of projecting parts 39a, 39a formed with a space therebetween, the space corresponding to the thickness of the control boards 28. The projecting parts 39a extend in the horizontal direction. The control boards 28 are retained in horizontal position by inserting right end left end parts of the control boards 28 between the projecting parts 39a, 39a.

In each of the retaining parts 39, each control board 28 is inserted between the projecting parts 39a, 39a and can fall off the projecting parts 39a, 39a when the attachment frame body 35 is tilted after being removed from the casing 11. Therefore, the control boards 28 and the retaining walls 35a, 35b of the present embodiment are provided with anti-falling off means 41 for preventing the control boards 28 from falling, as shown in Figs. 4A and 4B. Instead of cutting the left and right retaining walls 35a, 35b to allow them to project inward, the retaining parts 39 may be configured by members that are fitted and fixed to holes formed in the retaining walls 35a, 35b. These members, made from resin, have substantially C-shaped cross sections, and may be configured by members having insertion grooves that are as thick as the control boards 28. In this case, even when the control boards 28 are reduced in size, the distance between a wiring pattern on each control board 28 and the metal attachment frame body 35 can be kept at a certain distance or more. Therefore, these members are advantageous in this case in terms of dielectric strength voltage. In this case, the retaining parts 39 may be fixed to the retaining walls 35a, 35b, not only by fitting the retaining parts 39 into the retaining walls 35a, 35b, but also by using tightening tools such as bolts. The retaining parts 39 may also have substantially the same size as the control boards 28 in a depth direction.

The anti-falling off means 41 is provided in each of the control boards 28. Each anti-falling off means 41 has a swinging member 41 a attached swingably to the corresponding control board 28, and a click part 41b attached to the retaining walls 35a, 35b so as to be insertable between the swinging member 41a and the control board 28. The control board 28 is prevented from falling off the attachment frame body 35 by sandwiching the click part 41 b between the swinging member 41 a and an end part of the control board 28. The click part 41b may be attached in a detachable manner to the attachment frame body 35 by a tightening tool such as a bolt. Alternatively, an end part of the click part 41b may be fixed to the attachment frame body 35 and configured to be elastically deformable between a position between the swinging member 41 a and the control board 28 where the click part 41b is inserted, and a position where the click part 41b slips out.

The attachment frame body 35 is positioned correctly in a predetermined position within the casing 11 by a frame body attachment member 43. More specifically, the frame body attachment member 43 is a flat member fixed to an inner surface of a back wall 12a of the case main body 12, as shown in Figs. 6A and 6B. The frame body attachment member 43 is provided with guide parts 44 for guiding the attachment frame body 35 to a predetermined position when attaching the attachment frame body 35 to the casing 11. The guide parts 44 are pin-shaped sections extending from the frame body attachment member 43 in one direction (forward), and have tapering tip end parts. The guide parts 44 are so shaped as to correspond to the through-holes 35h formed in the first positioning part 35e and the second positioning part 35f of the attachment frame body 35. The positions where the guide parts 44 are formed are managed accurately. Therefore, the attachment frame body 35 is positioned in the predetermined position in the casing 11 (vertical and lateral directions) by inserting the guide parts 44 into the through-holes 35h. The attachment frame body 35 is positioned by the frame body attachment member 43 fixed to the case main body 12, instead of directly providing the guide parts 44 to the case main body 12 and positioning the attachment frame body 35 by means of the case main body 12. For this reason, the attachment frame body 35 can be positioned correctly by the frame body attachment member 43 without forming the case main body 12 itself into a correct shape.

As shown in Figs. 2, 4A and 4B, the right guide part 44 is disposed below the connecting part 27c and partially overlaps with the connecting part 27c in the vertical direction. Therefore, a space between the attachment frame body 35 and the first board 27a is utilized effectively, contributing to downsizing of the casing 11.

The frame body attachment member 43 is provided with a spacer 45 (see Fig. 3) against which the second board 27b is brought into abutment. The spacer 45 defines a position in the depth direction where the second board 27b is set up.

The lid 13 of the casing 11 is configured in the form of a hinged door. In other words, the lid 13 is turnable with respect to the case main body 12 via a hinge part 48. The hinge part 48 is provided to the right of the casing 11 as viewed from the front, and the lid 13 is provided with a catch 49 on the other side of the hinge part 48. Note that the hinge part 48 may be provided to the left of the casing 11, or the lid 13 may be configured to be detachable with respect to the case main body 12.

As shown in Fig. 3, the lid 13 has a front surface part, an upper surface part, a lower surface part and right and left side surface parts, and has a certain depth in the longitudinal direction. The upper surface part, the lower surface part and the right and left side surface parts are bent inward at intermediate parts, and tip side parts thereof are bent outward. The tip side parts are tilted gradually toward the outside. On the other hand, square-cylinder shaped members 50 are provided on inner surfaces in the vicinity of front end parts of the side walls 12b, 12c, the upper wall 12e and a bottom part 12f of the case main body 12. The square-cylinder shaped members 50 have sections that are surface-joined to the case main body 12 and sections (placement parts) 50a that project step-like inward from these sections and thereby form a space with the case main body 12. The square-cylinder shaped members 50 have crank-shaped cross sections. Waterproof gaskets 51 are placed in the placement parts 50a of the members 50. The gaskets 51 are provided over the entire periphery of the front surface opening of the case main body 12. Closing the lid 13 brings back end parts of the upper surface part, the lower surface part, and the right and left side surface parts of the lid 13 into contact with the gaskets 51 while pressing the gaskets 51. Conductive gaskets may be placed inside the gaskets 51. The conductive gaskets can prevent the propagation of outside noise into the casing 11.

A sponge 52 for pressing the control boards 28 is placed in the lid 13. When the lid 13 is closed, the sponge 52 is fixed to the lid 13 at a position where the sponge 52 can push the front of the swinging members 41 a of the control boards 28.

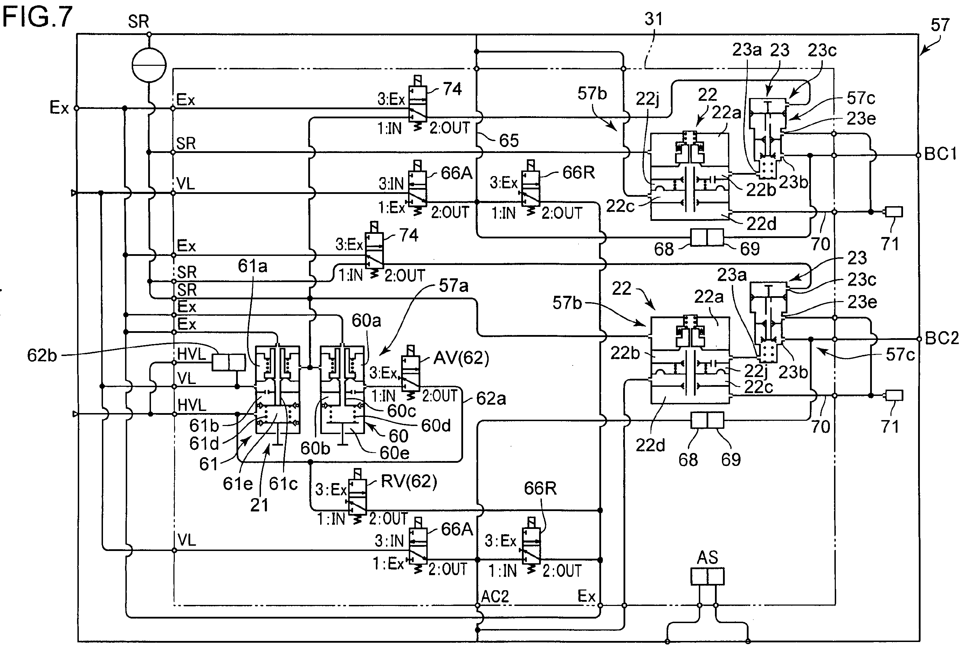

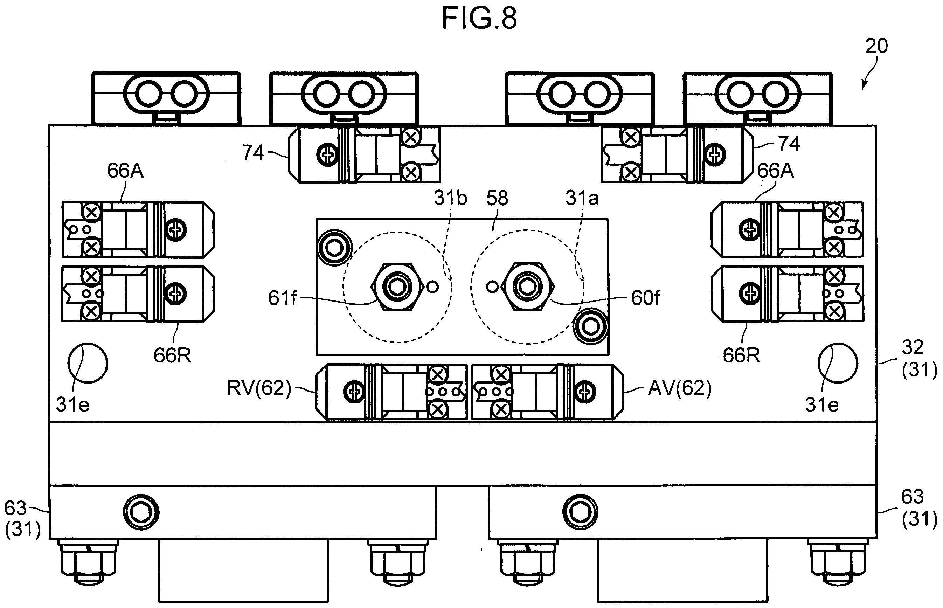

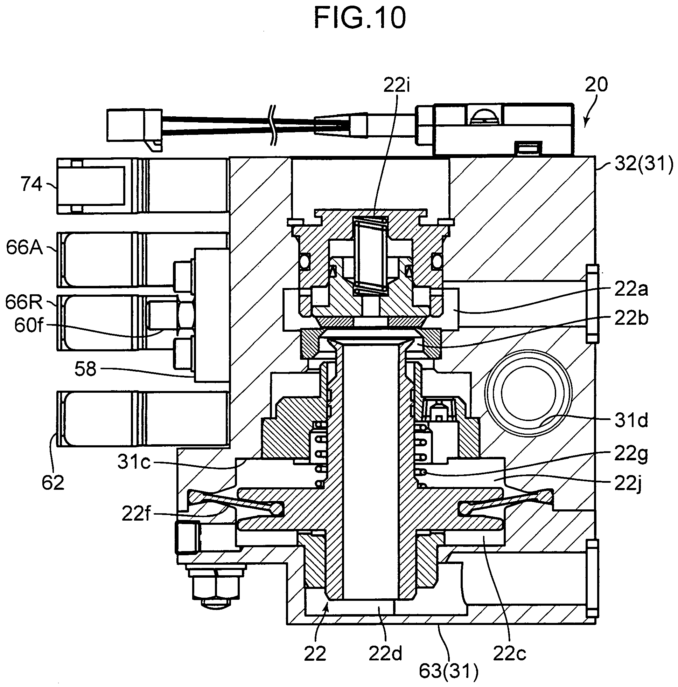

The brake control device 10 according to the present embodiment is provided with a compressed air circuit 57 shown in Fig. 7. The compressed air circuit 57 is formed so as to stride across the block 31 of the brake pressure control valve 20 and the seat tube 14. Fig. 8 is a diagram in which the block 31 is viewed from front (front view). Fig. 9 is a cross-sectional diagram showing the inside of the block 31 viewed from the front as well. Fig. 10 is a cross-sectional diagram showing the inside of the block 31 viewed from the right side. Fig. 11 is a cross-sectional diagram showing the inside of the block 31 viewed from above. As shown in these diagrams, the block 31 is provided with the variable load valve 21 (see Fig. 11), the two relay valves 22, 22 (see Fig. 9) and the two forced open valves 23 (see Fig. 11) that configure the compressed air circuit 57. In other words, the variable load valve 21, the relay valves 22, 22 and the forced open valves 23 are provided integrally in the block 31.

The compressed air circuit 57 is an air circuit for adjusting the pressure of air obtained from an air source (not shown), which is a source of supply of compressed air, and then applying the air to the brake cylinder, not shown. The compressed air circuit 57 has a variable load pressure generating part 57a for generating variable load pressure VL, brake pressure generating parts 57b for generating brake pressure BC based on the variable load pressure VL, and forced open parts 57c for forcibly letting out the brake pressure BC.

The variable load pressure generating part 57a is a part that has the variable load valve 21 in the compressed air circuit 57.

The variable load valve 21 is placed in the first hole parts 31 a, 31 b formed in a block main body 32 of the block 31, as shown in Fig. 11. The first hole parts 31a, 31 b extend from a front surface of the block main body 32 toward a back surface of the same at substantially a central part in width and height directions of the block 31. The first hole parts 31 a, 31 b are stretched in the longitudinal direction more than the lateral direction and provided horizontally as a pair (see Fig. 9). These two hole parts 31 a, 31 b are disposed parallel to each other.

The variable load valve 21 has a pressure regulating valve 60 and an output valve 61. The pressure regulating valve 60 is placed in the right hole part (pressure regulating valve hole part) 31a of the first hole parts 31a, 31b, whereas the output valve 61 is placed in the left hole part (output valve hole part) 31 b of the first hole parts 31 a, 31b. Front end parts of the first hole parts 31a, 31b are closed by a first cover member 58. The pressure regulating valve 60 is a valve for limiting source pressure SR supplied from the air source, to pressure equivalent to variable load pressure obtained when the vehicle is full. The variable load pressure obtained when the vehicle is full means pressure that is equivalent to the pressure to be applied to the brake cylinder upon activation of an emergency brake when the vehicle is full.

As shown in Fig. 11, the pressure regulating valve 60 has an input chamber 60a with an input port, an output chamber 60b with an output port, a piston 60c, a pressure adjusting chamber 60e having a packed-vehicle securing spring 60d for limiting the source pressure to the pressure equivalent to the variable load pressure obtained when the vehicle is full, and a packed-vehicle pressure adjusting screw 60f for adjusting biasing force of the packed-vehicle securing spring 60d. The input chamber 60a receives an input of the source pressure SR via the input port.

The piston 60c adjusts the amount of opening of an opening formed on a partition between the input chamber 60a and the output chamber 60b, on the basis of a pressure difference between suppressing force of the packed-vehicle securing spring 60d and air pressure within the output chamber 60b, and then closes this opening when there no longer exists the pressure difference. The compressed air of the input chamber 60a flows into the output chamber 60b as the opening opens. As a result, the pressure within the output chamber 60b is adjusted to the pressure equivalent to the variable load pressure obtained when the vehicle is full, and then this pressure is output via the output port.

The packed-vehicle pressure adjusting screw 60f, which is a pressure adjusting part, is disposed on the front surface side of the variable load valve 21 and passes through the first cover member 58. An inner end part of the packed-vehicle pressure adjusting screw 60f is shaped into a circular cone and presses an end part of the packed-vehicle securing spring 60d by means of a pressing member 60g in the pressure adjusting chamber 60e.

A section of the pressing member 60g that comes into contact with the packed-vehicle pressure adjusting screw 60f forms a conical concave part. Moreover, the other end of the packed-vehicle securing spring 60d is provided with a pressing member 60h. A surface of the pressing member 60h that is opposite from the packed-vehicle securing spring 60d is provided with a conical concave part. On the other hand, a receiving member 60i having a conical tip end is attached to the piston 60c. The tip end of the receiving member 60i is in contact with the concave part of the pressing member 60h, and a small gap is formed between the piston 60c and the pressing member 60h. Therefore, the pressing member 60h is capable of swinging around the tip end of the receiving member 60i.

With such configurations, force that tries to tilt the piston 60c does not act even when the biasing force of the spring 60d decenters the piston 60c. Thus, the operating lives of the seal and the like can be extended. In addition, the packed-vehicle securing spring 60d is prevented from being shifted during an operation of the packed-vehicle pressure adjusting screw 60f.

The pressure equivalent to the variable load pressure obtained when the vehicle is full can be adjusted by adjusting how far the adjusting screw 60f is submerged. In principle this adjustment is performed at the time of manufacture of the vehicle but is also performed when replacing the variable load valve 21 or after completion of a disassembly maintenance work.

As shown in Fig. 7, a solenoid valve 62 is connected to the variable load valve 21 via a connecting path 62a. The solenoid valve 62 has an air supply part AV and an air exhaust part RV, and adjusts the pressure that is output from the pressure regulating valve 60, in accordance with a current load of the vehicle with a passenger therein. The air supply part AV and the air exhaust part RV of the solenoid valve 62 are attached to a front surface of the block 31 (see Fig. 8). The air supply part AV is configured by a 2-position 3-port switch valve and has an input port IN linked to the output port of the pressure regulating valve 60, an output port OUT to which the connecting path 62a is connected, and a discharge port EX. The air exhaust part RV is configured by a 2-position 3-port switch valve and has an input port IN linked to the connecting path 62a, an output port OUT, and a discharge port EX. The solenoid valve 62 adjusts the pressure output from the pressure regulating valve 60, by controlling valve positions of the air supply part AV and the air exhaust part RV on the basis of a control signal. The pressure HVL adjusted by the solenoid valve 62 is input to the output valve 61 as pilot pressure. The control signal is a signal that is transmitted, to the solenoid valve 62, from the control circuits, which are configured by microcomputer circuits mounted in the control boards 28. The control signal is output such that the variable load pressure VL is generated, in response to a signal from a pressure sensor AS for detecting pressure of an unshown air spring receiving the load of the vehicle, and according to a detection value of a pilot pressure sensor 62b provided in the connecting path 62a.

The air supply part AV and the air exhaust part RV are in a state shown in Fig. 7, when no electric current is supplied. In other words, in this state, the connection between the pressure regulating valve 60 and the output valve 61 is blocked, and the input port IN of the air exhaust part RV is closed. For this reason, even when the control signal cannot be input to the solenoid valve 62 due to a power failure or electric failure, the pressure HVL that is set until immediately before the power failure or electric failure can be maintained. Therefore, in this case as well, the pressure of the output valve 61 is secured at a pressure adjusting chamber 61e.

The output valve 61 regulates the source pressure SR to the variable load pressure VL corresponding to the current load of the vehicle with a passenger therein, using the pressure HVL regulated by the solenoid valve 62 as the pilot pressure. The variable load pressure VL is output from the variable load valve 21. The output valve 61 has an input chamber 61 a having an input port to which the source pressure SR is input, an output chamber 61b with an output port, a piston 61c, and the pressure adjusting chamber 61e with a pressure adjusting port. The pressure HVL is input to the pressure adjusting port as pilot pressure. In the pressure adjusting chamber 61e, there is an empty-vehicle securing spring 61 d for generating pressure that is equivalent to variable load pressure obtained when the vehicle is empty. The variable load pressure obtained when the vehicle is empty means pressure that is equivalent to the pressure to be applied to the brake cylinder upon activation of the emergency brake when the vehicle is empty.

The output valve 61 is provided with the empty-vehicle securing spring 61d for generating the pressure that is equivalent to the variable load pressure obtained when the vehicle is empty. Therefore, even if the pilot pressure disappears due to mechanical failure or the like, the empty-vehicle securing spring 61d can secure at least the pressure that is equivalent to the variable load pressure obtained when the vehicle is empty. Specifically, even when the air is not supplied from the pressure regulating valve 60, the pressure inside the output chamber 61b can be maintained as pressure that is equivalent to pressure obtained by biasing force of the empty-vehicle securing spring 61d, because the biasing force of the empty-vehicle securing spring 61d can open an opening formed between the input chamber 61 a and the output chamber 61 b.

The piston 61c adjusts the amount of opening of the opening formed on a partition between the input chamber 61 a and the output chamber 61b on the basis of a pressure difference between the air pressure within the output chamber 61 b and the total pressure of the pressure by the biasing force of the empty-vehicle securing spring 61d and the air pressure within the pressure adjusting chamber 61e, and then closes this opening when there no longer exists the pressure difference. Compressed air of the input chamber 61a flows into the output chamber 61b as the opening opens. As a result, the pressure within the output chamber 61b is adjusted to the variable load pressure VL.

The output valve 61 is provided with an empty-vehicle pressure adjusting screw 61f for adjusting the pressure obtained by the biasing force of the empty-vehicle securing spring 61d. The empty-vehicle pressure adjusting screw 61f, which is a pressure adjusting part, is disposed on the front surface side of the variable load valve 21 and passes through the first cover member 58. An inner end part of the empty-vehicle pressure adjusting screw 61f is located inside the pressure adjusting chamber 61e and presses an end part of the empty-vehicle securing spring 61 d by means of a pressing member 61 g.

A section of the pressing member 61 g that comes into contact with the empty-vehicle pressure adjusting screw 61f forms a conical concave part. The other end of the empty-vehicle securing spring 61 d is provided with a pressing member 61h. A surface of the pressing member 61h that is opposite from the empty-vehicle securing spring 61d is provided with a conical concave part. On the other hand, a receiving member 61i having a conical tip end is attached to the piston 61c. The tip end of the receiving member 61i is in contact with the concave part of the pressing member 61h, and a small gap is formed between the piston 61c and the pressing member 61h. Therefore, the pressing member 61h is capable of swinging around the tip end of the receiving member 61 i.

With such configurations, force that tries to tilt the piston 61c does not act even when the biasing force of the spring 61d decenters the piston 61c. Thus, the operating lives of the seal and the like can be extended. In addition, the empty-vehicle securing spring 61 d is prevented from being shifted during an operation of the empty-vehicle pressure adjusting screw 61f. It should be noted that the pressure adjusting chamber 61e is kept airtight by the seal provided in the pressing member 61 g.

The pressure equivalent to the variable load pressure of the empty vehicle can be adjusted by adjusting how far the adjusting screw 61f is submerged. In principle this adjustment is performed at the time of manufacture of the vehicle but is also performed when replacing the variable load valve 21 or after completion of a disassembly maintenance work.

The brake pressure generating part 57b is a section with the relay valves 22 in the compressed air circuit 57. In the present embodiment, two brake pressure generating parts are formed because there are two relay valves 22.

As shown in Fig. 9, the relay valves 22 are placed in the second hole parts 31 c, 31 c formed in the block main body 32 of the block 31. The second hole parts 31 c, 31 c are formed as a pair so as to extend vertically in positions to the right of the first hole part 31 a and to the left of the first hole part 31 b. The second hole parts 31 c have lower end parts opened to a lower surface of the block main body 32, and the lower end parts are closed by second cover members 63, which are bottom lid parts. The second cover members 63 are tightened to the block main body 32 with bolts, tightening members. A central part of each of the second cover members 63 other than the parts tightened with the bolts, protrudes lower than lower end parts of the bolts, and lower end surfaces of the second cover members 63 are flat. Therefore, even when removing the block 31 from the tube seat 14 and putting the block 31 on a ground, the block 31 can be held stably by the lower end surfaces of the second cover members 63. Furthermore, inner surfaces of the projecting sections of the second cover members 63 are shaped into concaves to allow below-described pistons 22e of the relay valves 22 to be inserted thereto. Such configurations also can achieve reduction in size and weight of the block 31. As described above, the block 31 has the block main body 32 in which the hole parts 31 a to 31 d are formed, the first cover member 58 for closing the first hole parts 31a, 31b, and the second cover members 63 for closing the second hole parts 31 c.

As shown in Fig. 7, an air supply solenoid valve 66A and an air exhaust solenoid valve 66R are connected to each relay valve 22 via a connecting path 65. The air supply solenoid valve 66A and the air exhaust solenoid valve 66R are attached to the front surface of the block 31 (see Fig. 8). The air supply solenoid valve 66A is configured by a 2-position 3-port switch valve and has an input port IN to which the variable load pressure VL is input, an output port OUT to which the connecting path 65 is connected, and a discharge port EX. The air exhaust solenoid valve 66R is configured by a 2-position 3-port switch valve and has an input port IN linked to the connecting path 65, an output port OUT, and a discharge port EX.

A control signal is output from the control circuits, which are configured by the microcomputer circuits mounted in the control boards 28, and input to the air supply solenoid valve 66A and the air exhaust solenoid valve 66R. The control signal is generated based on a signal corresponding to a service brake command sent from the vehicle to the brake control device 10, a signal based on a detection value of a pilot pressure sensor 68 provided in the connecting path 65, a signal based on a detection value of a brake pressure sensor 69 described hereinafter, and a signal corresponding to a result of computation performed by a wheel slide detector (not shown) of each control circuit. Note that the wheel slide detector detects a wheel slide from a speed of the vehicle obtained from a host system, not shown, and rotational speed of a wheel.

Upon reception of the service brake command, the control circuits of the control boards 28 set the brake pressure BC to be output from the relay valves 22, and transmit a control signal corresponding to the brake pressure BC, to the air supply solenoid valve 66A and the air exhaust solenoid valve 66R. Subsequently, the air supply solenoid valve 66A and the air exhaust solenoid valve 66R adjust valve positions thereof in response to the control signal, thereby adjust the variable load pressure VL that is output from the variable load valve 21, and input the adjusted pressure as the pilot pressure to the relay valves 22 through the connecting path 65. Furthermore, a controller adjusts the valve positions of the air supply solenoid valve 66A and the air exhaust solenoid valve 66R in accordance with the detection value of the pilot pressure sensor 68 and the detection value of the brake pressure sensor 69.

The control circuits also correct the brake pressure BC to be output from the relay valves 22, according to the result of the computation performed by the wheel slide detectors. At this moment, the control circuits lower the brake pressure BC until the wheel slide detectors generates a result that no longer shows a wheel slide. In this case, the brake pressure BC may be gradually lowered.

The pressure adjusted by the air supply solenoid valve 66A and the air exhaust solenoid valve 66R is input to the relay valves 22 as a pilot pressure. The relay valves 22 output the brake pressure BC according to the pilot pressure. Specifically, as shown in Fig. 9, each of the relay valves 22 has an input chamber 22a with an input port, an output chamber 22b with an output port, a control chamber 22c with a pilot port, a discharge chamber 22d with a discharge port, a hollow piston 22e, diaphragms 22f, a spring 22g, a valve body 22h, and a spring 22i.

The source pressure SR is input to the input chamber 22a via the input port. The pilot port is connected to the communicating path 65, and the pilot pressure is input to the control chamber 22c via the pilot port. The output chamber 22b generates brake pressure corresponding to the pilot pressure, and outputs the brake pressure via the output port. The discharge chamber 22d discharges excess pressure via the discharge port. A discharge pipe line 70 linked to the discharge port is provided with a muffler 71.

The piston 22e is placed so as to be able to move vertically. Each of the diaphragms 22f is disposed so as to project laterally from the piston 22e and reciprocatably supports the piston 22e. The diaphragm 22f also sags due to a pressure difference between air pressure of the control chamber 22c and air pressure of the output chamber 22b, and thereby displaces the piston 22e while acting against biasing force of the spring 22g. When the piston 22e is displaced upward, the valve body 22h moves upward while acting against biasing force of the spring 22i. This allows the input chamber 22a and the output chamber 22b to be communicated with each other. When there no longer exists a pressure difference, the piston 22e is displaced downward, and the valve body 22h is moved by the spring 22i. As a result, the input chamber 22a and the output chamber 22b are no longer communicated with each other. When, on the other hand, the piston 22e is displaced downward, the output chamber 22b and the discharge chamber 22d are communicated with each other by the hollow part of the piston 22e. At this moment, the output pressure flows into the spring chamber 22j as well, via a restriction 14, to act in a direction of pushing the piston down. Subsequently, when there no longer exists a pressure difference between the pressure of the control chamber 22c and the output pressure (the spring chamber 22j), the piston 22e is displaced upward, and the output chamber 22b and the discharge chamber 22d are no longer communicated with each other.

In other words, the pressure within the output chamber 22b is adjusted to the brake pressure according to the pilot pressure, when compressed air of the input chamber 22a flows into the output chamber 22b or when compressed air of the output chamber 22b is discharged to the discharge chamber 22d.

Note that the spring chamber 22j and the output chamber 22b are communicated with each other by the restriction 22k in order to prevent the piston 22e from becoming excessively sensitive to a transitional change of the output chamber 22b.

The two relay valves 22, 22 are disposed in horizontal alignment with a space therebetween such that the diaphragms 22f, 22f are mutually adjacent. The variable load valve 21 is disposed in the position between the two pistons 22e, 22e, as well as above the position where the diaphragms 22f, 22f are mutually adjacent. The variable load valve 21 is disposed at a level between the highest parts of the relay valves 22 and the diaphragms 22f.

The forced open parts 57c are parts which have the forced open valves 23 in the compressed air circuit 57.

As shown in Fig. 11, the forced open valves 23 are placed in third hole parts 31 d, 31 d formed in the block main body 32. In the present embodiment, two forced open valves 23 are provided so as to correspond to the two relay valves 22. Therefore, two third hole parts 31 d, 31 d are provided.

The left third hole part 31d extends from a left side surface of the block main body 32 toward a center in the width direction, and the right third hole part 31d extends from a right side surface of the block main body 32 to the center in the width direction. The third hole parts 31 d, 31 d are laterally symmetric. As shown in Figs. 10 and 11, the third hole parts 31 d, 31 d are formed on the back of the second hole parts 31 c, 31 c in which the relay valves 22, 22 are placed, so as not to intersect with the second hole parts 31 c, 31 c. Furthermore, the third hole parts 31 d, 31 d are formed to be lower than the first hole parts 31 a, 31 b where the variable load valve 21 is placed, so as not to intersect with the first hole parts 31a, 31b.

The forced open valves 23 are fixed inside the respective third hole parts 31 d by C-shaped retaining rings 23k. Insertion holes 31e passing through circumferential walls immediately outside the C-shaped retaining rings 23k are formed in the block main body 32. This insertion holes 31e also pass through the third hole parts 31 d. In other words, the insertion holes 31e and the third hole parts 31 d share spaces. The insertion holes 31e pass through the block 31 in the longitudinal direction, and the block 31 can be tightened to the tube seat 14 by bolts (tightening members) 72 (see Fig. 2) inserted into the insertion holes 31e. Note that the presence of space sections of the third hole parts 31d (a left space from the left C-shaped retaining ring 23k in the case of the left third hole part 31d, and a right space from the right C-shaped retaining ring 23k in the case of the right third hole part 31d) facilitates insertion of the forced open valves 23 at the time of an assembly work. Moreover, allowing the space sections of the third hole parts 31d to serve as the insertion holes of the bolts (tightening members) 72 can achieve downsizing of the block 31. Furthermore, unlike when extending end members 23j of the forced open valves 23 and providing the end members 23j with the insertion holes of the bolts (tightening members) 72, the positions for inserting the bolts (tightening members) 72 do not have to match the positions for assembling the forced open valves 23. Therefore, the assembly work can be performed readily. In addition, the weight of the block 31 can be reduced by this space.

As shown in Fig. 11, each of the forced open valves 23 has an elongated shape in a direction (lateral direction) perpendicular to the longitudinal direction. In other words, a longer direction of each forced open valve 23 is orthogonal to a direction in which the pistons 22e of the relay valves 22 reciprocate. Also, each forced open valve 23 is disposed below the highest part of each relay valve and above each diaphragm 22f (see Fig. 10). In addition, when viewed from above, at least a part of each forced open valve 23 is located between the tube seat 14 and the corresponding piston 22e and within a range inside the diaphragm 22f in its radial direction.

The forced open valves 23 forcibly discharge the brake output BC that is output from the relay valves 22, when outputs from opening solenoid valves 74 are input as pilot pressure.

Each of the opening solenoid valves 74 is configured by a 2-position 3-port switch valve and has an input port IN, an output port OUT and a discharge port EX. The opening solenoid valve 74 can be switched between a first state and a second state. In the first state, which is a normal state, the input port IN is blocked, and the output port OUT and the discharge port EX are communicated with each other, as shown in Fig. 7. The discharge port EX is linked to an exhaust port of the brake control device 10. The state of the opening solenoid valve 74 is switched to the second state on the basis of a forced release command from a driver's seat. In the second state, the source pressure SR that is input to the input port IN is output from the output port OUT. The opening solenoid valve 74 is normally in the first state. However, the state of the opening solenoid valve 74 is switched to the second state in response to an input of the forced release command to the control circuits that are configured by the microcomputer circuits mounted in the control boards 28. Note that the forced release command is a signal that is transmitted from the driver's seat to the brake control device 10 by an operation of a driver or the like when an unreleased state of the wheel is detected.

As shown in Fig. 11, each of the forced open valves 23 has an input port 23a, an output port 23b, a control port 23c, a piston 23d, an exhaust port 23e, and a spring 23g. A space within the forced open valve 23 is partitioned into a control chamber 23f and a switching chamber 23h by the piston 23d. The input port 23a is connected to the output port of each relay valve 22. The output port 23b is connected to the brake cylinder, not shown, and pressure that is output from the output port 23b becomes the brake pressure BC. A pipe line that extends from the output port 23b to the brake cylinder is provided with the brake pressure sensor 69. The exhaust port 23e is connected to the discharge pipe line 70.

The control port 23c is provided in the control chamber 23f. This control port 23c is communicated with the output port OUT of each opening solenoid valve 74. Therefore, the piston 23d is displaced between a first position and a second position in accordance with the state of the opening solenoid valve 74. Each forced open valve 23 is inserted into the corresponding third hole part 31d such that the control chamber 23f is positioned outside. The third hole parts 31d is closed by the. end members 23j configuring the control chamber 23f

When the opening solenoid valve 74 is in the first state, the piston 23d is placed in the first position by the spring 23 g, as shown in Fig. 11. At this moment, in the switching chamber 23h, the input port 23a and the output port 23b are communicated with each other, whereas the connection between the output port 23b and the exhaust port 23e is blocked. When the opening solenoid valve 74 is in the second state, on the other hand, the pressure within the control chamber 23f becomes stronger than the spring force, whereby the spring 23g contracts. Consequently, the piston 23d is placed in the second position. In the switching chamber 23h at this moment, the connection between the input port 23a and the output port 23b is blocked by the piston 23d, and the output port 23b and the exhaust port 23e are communicated with each other by a communication path 23i formed in the piston 23d. Therefore, the forced open valve 23 outputs the brake pressure BC from the output port 23b when the opening solenoid valve 74 is in the first state, while discharges the brake pressure BC via the output port 23b and the exhaust port 23e when the state of the opening solenoid valve 74 is switched to the second state.

Operational control of the brake control device 10 according to the present embodiment is described next.

The control circuits (control boards 28) configured by the microcomputer circuits set the pressure HVL and the variable load pressure VL in response to a signal from the pressure sensor AS, and transmit a control signal to the solenoid valve 62. Furthermore, upon reception of the service brake command, the control circuits set the brake pressure and transmit a control signal to the air supply solenoid valve 66A and the air exhaust solenoid valve 66R.

The pressure that is equivalent to the variable load pressure obtained when the vehicle is full is output from the pressure regulating valve 60 of the variable load valve 21, and the pressure HVL is input to the output valve 61 as the air supply part AV and the air exhaust part RV of the solenoid valve 62 are operated in response to the pilot signal. The output valve 61 of the variable load valve 21 displaces the piston 61c on the basis of the pressure HVL as the pilot pressure, and outputs the variable load pressure VL.

The variable load pressure VL is output from the variable load valve 21 and input to the relay valves 22, 22. In the relay valves 22, 22, the valve positions of the air supply solenoid valve 66A and the air exhaust solenoid valve 66R are adjusted in response to the control signals. Consequently, the variable load pressure VL is adjusted to a predetermined pressure. This pressure is input as the pilot pressure to the relay valves 22, 22 via the connecting path 65. In each of the relay valves 22, the piston 22e is displaced according to the pilot pressure, and the brake pressure BC is output from the output port. At this moment, the valve positions of the air supply solenoid valve 66A and the air exhaust solenoid valve 66R are adjusted in accordance with the detection value of the pilot pressure sensor 68 and the detection value of the brake pressure sensor 69.

The control circuits also correct the brake pressure BC to be output from the relay valves 22, in accordance with a result of computation performed by the wheel slide detectors (not shown). In so doing, the control circuits lower the brake pressure BC until the wheel slide detectors generate a result that no longer shows a wheel slide. In this case, the brake pressure BC may be gradually lowered. Note that the presence/absence of a slide is detected based on an inconsistency between the speed of the vehicle and a speed calculated from the rotational speed of the wheels.

The opening solenoid valve 74 of each relay valve 22 is normally in the first state. However, the state of the opening solenoid valve 74 is switched to the second state in response to an input of the forced release command from the driver's seat to the control circuits. As a result, the brake pressure BC is discharged via the forced open valve 23, thereby canceling the unreleased state.

In the present embodiment described above, the variable load valve 21 and the two relay valves 22, 22 are incorporated in a single block 31. Therefore, compared to a configuration in which a variable load valve block and relay valve blocks are arranged, the configuration described in the present embodiment can downsize the block 31. In other words, because the variable load valve 21 is disposed in a position away from where the diaphragms 22f, 22f are mutually adjacent in the block 31, the variable load valve 21 can be placed, while having the two relay valves 22, 22 disposed as close to each other as possible. As a result, the block 31 can be downsized. Furthermore, by arranging the two relay valves 22, 22 in the single block 31, the variable load valve 21, which is too large to be placed in a single relay valve block, can be placed in the abovementioned position. Therefore, the variable load valve 21 can be placed easily even when the relay valves 22, 22 are reduced in size. Compared to when individually configuring blocks of the variable load valve 21 and the two relay valve 22, 22, a space for disposing the attachment members such as bolts, which are provided to fix these components, can be reduced. As a result, the brake pressure control valve 20 can be downsized, contributing to downsizing of the brake control device 10. Since the relay valves 22, 22 are arranged laterally in the block 31, the block 31 can be held stably even when the relay valves 22, 22 are removed during a maintenance work.

In the present embodiment, the variable load valve 21 is placed such that the adjusting screw 60f of the pressure regulating valve 60 and the adjusting screw 61f of the output valve 61 face forward. Thus, the variable load valve 21 can be disposed at a level between the highest parts of the relay valves 22 and the diaphragms 22f, regardless of the height of the relay valves 22. Accordingly, the brake pressure control valve 20 can be further downsized, contributing to further downsizing of the brake control device 10. Moreover, the variable load valve 21 can be placed easily in the abovementioned space because the variable load valve 21 is provided with the pressure regulating valve 60 and the output valve 61 separately.

In the present embodiment, each of the forced open valves 23 is disposed in the position that is shifted laterally from the corresponding relay valve 22, which is the position between the highest part of the relay valve 22 and the corresponding diaphragm 22f. This can prevent increase in size of the brake pressure control valve 20 and cause the brake pressure control valve 20 to also function as the forced open valves 23.

In the present embodiment, because the longer direction of the forced open valves 23 is orthogonal to the direction in which the pistons 22e of the relay valves 22 reciprocate, each forced open valve 23 can be disposed at a level between the highest part of the corresponding relay valve 22 and the corresponding diaphragm 22f, regardless of the height of the relay valve 22. Therefore, the brake pressure control valve 20 functioning as the forced open valves 23 can be downsized, contributing to downsizing of the brake control device 10.

In the present embodiment, the insertion holes 31e through which the bolts 72 are inserted in order to attach the block 31 to the tube seat 14, and the third hole parts 31d, 31d in which the forced open valves 23 are placed, have (share) a partial common space. This facilitates insertion of the forced open valves 23 at the time of an assembly work. At the same time, the brake pressure control valve 20 can be downsized.

In the present embodiment, the second cover members 63 protrude further than the bolts used for fixing the cover members 63 to the block main body 32. Thus, the second cover members 63 come into contact with the ground when the brake pressure control valve 20 is put on the ground. Therefore, the bolts are prevented from coming into abutment with the ground. As a result, the brake pressure control valve 20 can be held stably, preventing damage to the bolts.

In the present embodiment, the inner side parts of the cannon connectors 18 are connected directly to the wiring board 27. The wiring board 27 is electrically connected, by the connectors 29, to the control boards 28 capable of controlling brake control valves. Therefore, no wires are necessary to electrically connect the cannon connectors 18 and the control boards 28 together in the casing 11. Because it is not necessary to secure a wiring space for thick wires, the casing 11 (the brake control device 10) can be downsized without receiving an impact of the standards defined by a vehicle manufacturer. Moreover, because no wires are necessary, a work for connecting the cannon connectors 18 to the control boards 28 within the casing can be simplified even after the casing 11 (the brake control device 10) is downsized.

In the present embodiment, the attachment frame body 35 capable of retaining the control boards 28 is provided detachably with respect to the casing 11. Thus, the plurality of control boards 28 can be pulled out of the casing 11 at once, by removing the attachment frame body 35 from the casing 11. In addition, because the attachment frame body 35 is provided with the retaining parts 39, the control boards 28 can be prevented from coming into contact with each other when the attachment frame body 35 is removed and carried when a maintenance work is performed. The control boards 28 can be loaded and removed easily by inserting or removing the control boards 28 from the attachment frame body 35 attached to the casing 11, via, for example, the near side opening.

In the present embodiment, the frame body attachment member 43 is fixed inside the casing 11. Therefore, the guide parts 44 can reliably move the attachment frame body 35 to a predetermined position of the frame body attachment member 43, when assembling or performing a maintenance work on the brake control device 10. Particularly, when downsizing the brake control device 10, and when the connectors 29 are located deep inside of the brake control device 10, the attachment frame body 35 can be moved to the predetermined position of the frame body attachment member 43 extremely easily and reliably. Further, the attachment frame body 35 can be placed accurately in a desired position by setting up a correct position for attaching the frame body attachment member 43, without forming the entire configuration of the casing 11 itself with high accuracy in accordance with arrangement accuracy of electronic components, which is higher than manufacturing accuracy of general machine components. Thus, the connectors 29 can be connected easily and reliably.

In the present embodiment, the fixing part for fixing the attachment frame body 35 to the casing 11 and the guide parts 44 are disposed between the attachment frame body 35 and the first board 27a. Thus, even when the attachment frame body 35 needs to be disposed away from the first board 27a, the fixing part and the guide parts 44 can be placed using the space between the attachment frame body 35 and the first board 27a. Therefore, an effective use of the space within the casing 11 can be made, contributing to further downsizing of the brake control device 10.

In the present embodiment, the communication port 33 for maintenance is placed in the first board 27a. Thus, it is not necessary to provide a communication port on the control boards 28, and, accordingly, downsizing of the control board 28 can be achieved while securing a freedom of placement of the electronic components. Moreover, the communication port 33 can be placed using the space between the attachment frame body 35 and the first board 27a. Therefore, the space within the casing 11 can be utilized more effectively, whereby the brake control device 10 can be downsized. Because the communication port 33 can be placed using the space between the attachment frame body 35 and the first board 27a, the space within the casing can be utilized more effectively, whereby the brake control device 10 can be downsized.

In the present embodiment, the second board 27b is placed within the casing 11 so as to be positioned on the same plane as the tube seat 14. Therefore, a sufficient area can be secured for the control boards 28 while downsizing the casing 11, and the freedom of placement of the electronic components can be secured.

In the present embodiment, the heavy block 31 is disposed on the lower side of the casing 11, and the light control boards 28 and wiring board 27 are disposed on the upper side of the casing 11. Therefore, the posture of the brake control device 10 can be stabilized when putting the brake control device 10 down. The cannon connectors 18 are also disposed on the upper side of the casing 11. Thus, the wires linked to the brake control device 10 can be made relatively short when the brake control device 10 is disposed on the lower side of the trolley of the vehicle.

In the present embodiment, the anti-falling off means 41 for preventing the control boards 28 from falling off the attachment frame body 35 is provided, and therefore, even when removing the attachment frame body 35 from the casing 11, the control boards 28 can be prevented from falling off the attachment frame body 35. Thus, by removing the attachment frame body 35 along with the control boards 28 when performing a maintenance work, the attachment frame body 35 can be transported to a place where the maintenance work is performed on the control boards 28 and other electronic components, without worrying about dropping and damaging the control boards 28.

In the present embodiment, the opening is formed in the upper surface part 35c of the attachment frame body 35, and the upper surface part 35c is disposed along the upper wall 12e of the casing 11. Therefore, heat from the control boards 28 can be emitted efficiently to the outside of the casing 11, via the upper wall 12e of the casing 11.

In the present embodiment, the control board 28 provided with the power circuits is disposed at the top, so that the emitted heat of the power circuits rarely affects the other control boards 28.

In the present embodiment, the electronic components having the same operating life are placed in the same control board 28. Thus, when performing a maintenance work to replace only the control boards 28 mounted with electronic components reaching the end of their lives, the number of the control boards 28 to be replaced can be reduced. This can reduce the number of elements that are unnecessarily replaced.

The present invention is not limited to the embodiment described above and can be modified and improved in various ways within the spirit and the scope of the present invention. For instance, in the present embodiment, the wiring board 27, the control boards 28 and the like are placed on the upper side of the casing 11, and the brake pressure control valve 20 is placed on the lower side, but the present invention is not limited to this configuration. For example, the wiring board 27, the control boards 28 and the like may be placed on the lower side, and the brake pressure control valve 20 may be placed on the upper side. In addition, the cannon connectors 18 may be attached to the left side wall 12c of the case main body 12.

Moreover, in the present embodiment, the control boards 28 are vertically arranged in horizontal position in the attachment frame body 35. Alternatively, the control boards 28 may be horizontally arranged in vertical position in the attachment frame body 35. In this case, the lower surface part 35d of the attachment frame body 35 is installed between the both side walls, and the opening of the upper surface part 35c is omitted or downsized. Also, the retaining parts 39 are formed in the upper surface part 35c and the lower surface part 35d of the attachment frame body 35. Then, large openings may be formed on right and left side walls of the attachment frame body 35.

Moreover, the forced open valves 23 may be disposed on the front side of the relay valves 22. The forced open valves 23 may also be omitted. The forced open valves 23 are fixed with the bolts 72 used for fixing the block 31 to the tube seat 14, but the forced open valves 23 may be fixed by members used for closing the third hole parts 31d.

Below is a summary of the embodiment described above.
(1) In the brake pressure control valve of the embodiment described above, the variable load valve and the two relay valves are incorporated in a single block. Thus, compared to when arranging the variable load valve block and the two relay valve blocks, the block can be downsized. In other words, because the variable load valve is disposed, in the block, in a position away from where the diaphragms are mutually adjacent, the variable load valve can be placed, while having the two relay valves disposed as close to each other as possible. As a result, the block can be downsized. Furthermore, by arranging the two relay valves in the single block, the variable load valve, which is too large to be placed in a single relay valve block, can be placed in the abovementioned position. Therefore, the variable load valve can be placed easily in the abovementioned position even when the relay valves or the relay valve blocks are downsized. Compared to when individually configuring the variable load valve block and the two relay valve blocks, a space for disposing the attachment members such as bolts, which are provided to fix these components, can be reduced. As a result, the brake pressure control valve can be downsized, contributing to downsizing of the brake control device. Since the relay valves are arranged laterally in the block, the block can be held stably even when the relay valves are removed during a maintenance work.
(2) The variable load valve may have the pressure regulating valve with a pressure adjusting part and the output valve with a pressure adjusting part. In this case, both of the two relay valves may be placed such that a reciprocating direction becomes a vertical direction, and the variable load valve may be disposed at a level between the highest parts of the relay valves and the diaphragms, and placed such that the pressure adjusting parts are positioned on the near side.
   In this aspect, because the variable load valve is placed such that the pressure adjusting part of the pressure regulating valve and the pressure adjusting part of the output valve face forward, the variable load valve can be disposed at a level between the highest parts of the relay valves and the diaphragms, regardless of the height of the relay valves. Therefore, the brake pressure control valve can be further downsized, contributing to further downsizing of the brake control device. Moreover, the variable load valve can be placed in the space easily by allowing the variable load valve to be provided with the pressure regulating valve and the output valve separately.
(3) The third hole parts are further formed in the block. The forced open valves, which can be activated to block brake pressure generated by the operation of the relay valves and to release air of the brake cylinder to the outside, may be disposed in the third hole parts. In this case, the forced open valves may be disposed in the positions located laterally with respect to the relay valves, and disposed in the positions between the highest parts of the relay valves and the diaphragms.
   In this aspect, the brake pressure control valve can be caused to function as the forced open valves, while preventing increase in size of the brake pressure control valve.
(4) In the aspect described above, the longer direction of the forced open valves may be orthogonal to the direction in which the pistons of the relay valves reciprocate.
   In this aspect, each forced open valve can be disposed at a level between the highest parts of the relay valves and the diaphragms, regardless of the height of the relay valves. Therefore, the brake pressure control valve functioning as the forced open valves can be downsized, contributing to downsizing of the brake control device.
(5) The insertion holes into which the tightening members are inserted in order to attach the block to the tube seat embedded with an air pipe, may be formed in the block. In this case, the insertion holes may share a space with the third hole parts.
   In this aspect, the insertion holes of the tightening members for fixing the block to the tube seat, and the third hole parts having the forced open valves placed therein, have (share) a partial common space. This facilitates insertion of the forced open valves at the time of an assembly work. At the same time, the brake pressure control valve can be downsized.
(6) The block may have the block main body in which the first hole parts and the second hole parts are formed, and the bottom lid part for closing the first hole parts. In this case, the bottom lid part may protrude further than the tightening members for fixing the bottom lid part to the block main body.
   In this aspect, because the bottom lid part comes into contact with the ground when the brake pressure control valves is put on the ground, the tightening members can prevent the brake pressure control valve from coming into contact with the ground. As a result, the brake pressure control valve can be held stably, preventing damage to the bolts.
(7) The brake control device of the embodiment described above has the casing, the brake pressure control valve placed within the casing, and the control board capable of controlling the brake pressure control valve.
(8) In the brake control device disclosed in Patent Document 1, the connectors and the control boards are connected by wires in the casing. The problem of this configuration is that it is troublesome to store the wires in a limited space of the casing. This problem is noticeable especially when increasing the diameters of the wires in accordance with the standards defined by a vehicle manufacturer in order to protect the brake control device from noise or to prevent wire disconnection. The size of the casing needs to be reduced in order to downsize the brake control device, but in such a case the diameters of the wires need to be restricted in order to store the wires in the casing having a limited size; which cannot comply with the standards defined by the vehicle manufacturer. In addition, workability in manually connecting the wires in the casing having a limited size is poor, increasing the manufacturing costs.
   Therefore, the brake control device of the embodiment described above may be provided in the casing, and may have the cannon connectors for connecting the wires outside the casing, the wiring board that is placed within the casing and connected to the inner side parts of the cannon connectors, and the connectors for electrically connecting the wiring board and the control boards to each other. The control boards may be provided separately from the wiring board in the casing.
   In this aspect, the inner side parts of the cannon connectors are connected to the wiring board, and the wiring board and the control boards capable of controlling the brake pressure control valve, are connected to each other by the connectors. Therefore, no wires are necessary for electrically connecting the cannon connectors and the control boards in the casing. Because it is not necessary to secure a wiring space for thick wires, the brake control device can be downsized without receiving an impact of the standards defined by the vehicle manufacturer. Moreover, because no wires are necessary, a work for connecting the cannon connectors to the control boards within the casing can be simplified even after the brake control device is downsized.
(9) The control boards may be provided in plurality. In this case, the attachment frame body, which has the retaining parts capable of retaining each of the control boards, may be provided inside the casing so as to be detachable with respect to the casing, and openings into which the control boards can be inserted may be formed in a near side section and a deep side section of the attachment frame body.
   In this aspect, the plurality of control boards can be removed from the casing at once, by removing the attachment frame body from the casing. Moreover, the retaining parts provided in the attachment frame body can prevent the control boards from coming into contact with each other when carrying the attachment frame body. Furthermore, the control boards can easily be loaded and removed by inserting or removing the control boards from the attachment frame body attached to the casing, through, for example, the near side opening.
(10) The brake control device may further have the frame body attachment member for positioning the attachment frame body in a predetermined position inside the casing, and the guide parts for guiding the attachment frame body to a predetermined position located with respect to the frame body attachment member.
   In this aspect, the guide parts can reliably move the attachment frame body to the predetermined position of the frame body attachment member, when assembling or performing a maintenance work on the brake control device. Particularly, when downsizing the brake control device, and when the connectors are located deep inside of the brake control device, the attachment frame body can be moved to the predetermined position of the frame body attachment member extremely easily and reliably. Further, the attachment frame body can be placed accurately in a desired position by setting up a correct position for attaching the frame body attachment member, without forming the entire configuration of the casing itself with high accuracy in accordance with arrangement accuracy of electronic components, which is higher than manufacturing accuracy of general machine components. Thus, the connector can be connected easily and reliably.
(11) When the cannon connectors are placed on the side wall of the casing, the wiring board may have the first board that is placed along the side wall and connected to the inner side parts of the cannon connectors, and the second board that is electrically connected to the first board, provided with the connectors, and disposed on the deep side of the attachment frame body. In this case, the fixing part for fixing the attachment frame body to the casing and the guide parts may be disposed between the attachment frame body and the first board.
   In this aspect, when disposing the attachment frame body in a position away from the first board, the fixing part and the guide parts can be placed using a space between the attachment frame body and the first board. Therefore, an effective use of the space within the casing can be made, contributing to further downsizing of the brake control device.
(12) The maintenance communication port may be placed in the first board.
   In this aspect, it is not necessary to provide a communication port on the control boards, and, accordingly, downsizing of the control boards can be achieved while securing a freedom of placement of the electronic components. Moreover, the communication port can be placed using the space between the attachment frame body and the first board. Therefore, an effective use of the space within the casing can be made, achieving downsizing of the brake control device.
(13) The inside of the casing may be provided with a tube seat for connecting an air pipe provided outside the casing to the brake pressure control valve placed inside the casing. In this case, at least a part of the second board may be positioned on the same plane as the tube seat.
   In this aspect, a sufficient area can be secured for the control boards while downsizing the casing, and the freedom of placement of the electronic components can be secured.
(14) The tube seat may be disposed below the control board, and the block of the brake pressure control valve may be disposed on the near side of the tube seat.
   In this aspect, the heavy block is disposed on the lower side of the casing, and the light control boards and wiring board are disposed on the upper side of the casing. Therefore, the posture of the brake control device can be stabilized when putting the brake control device down. The cannon connectors are also disposed on the upper side of the casing. Thus, the wires linked to the brake control device can be made relatively short when the brake control device is disposed on the lower side of the trolley of the vehicle.
(15) The brake control device may have the anti-falling off means for preventing the control boards from falling off the attachment frame body.
   In this aspect, the anti-falling off means can prevent the control boards from falling off the attachment frame body. Thus, the attachment frame body can be removed along with the control boards when performing a maintenance work, and then transported to a place where the maintenance work is performed on the control boards and other electronic components, without worrying about dropping and damaging the control boards.
(16) The attachment frame body may have the opening formed on the upper surface part thereof, and disposed along the upper wall of the casing.
   In this aspect, heat from the control boards can be emitted efficiently to the outside of the casing, via the upper wall of the casing.
(17) The plurality of control boards may be arrayed vertically, in which case the power circuits may be configured in the control board disposed at the top.
   In this aspect, the emitted heat of the power circuits rarely affects the other control boards.
(18) In the plurality of control boards, electronic components may be assigned to the plurality of control boards such that the electronic components having the same operating life are mounted in the same control boards.
   In this aspect, the electronic components having the same operating life are placed in the same control boards. Thus, when performing a maintenance work to replace only the control boards mounted with the electronic components reaching the end of their lives, the number of the control boards to be replaced can be reduced. This can reduce the number of elements that are unnecessarily replaced. Note that the term "operating life" used herein not only means the useful lives of the components, but also means their failure rates and mean-time-between-failures (MTBF).

### Explanation of reference numerals

- 11: Casing
- 12b: Side wall
- 14: Tube seat
- 18: Cannon connector
- 20: Brake pressure control valve
- 21: Variable load valve
- 22: Relay valve
- 22e: Piston
- 22f: Diaphragm
- 23: Forced open valve
- 27: Wiring board
- 27a: First board
- 27b: Second board
- 27c: Connecting part
- 28: Control board
- 28a: Connecting terminal
- 29: Connector
- 31: Block
- 31a: First hole part
- 31b: First hole part
- 31c: Second hole part
- 31d: Third hole part
- 31e: Insertion hole
- 32: Block main body
- 33: Communication port
- 35: Attachment frame body
- 35a: Retaining wall
- 35b: Retaining wall
- 35c: Upper surface part
- 35g: Opening
- 36: Frame body side fixing part
- 37: Case side fixing part
- 39: Retaining part
- 41: Anti-falling off means
- 43: Frame body attachment member
- 44: Guide part
- 60: Pressure regulating valve
- 60f: Adjusting screw (pressure adjusting part)
- 61: Output valve
- 61f: Adjusting screw (pressure adjusting part)
- 63: Second cover member (bottom lid part)
- 72: Bolt (tightening member)

## Claims

1. A brake pressure control valve, comprising:
a block (31) in which at least a first hole part (31 a, 31 b) and two second hole parts (31 c, 31 c) are formed;
a variable load valve (21) that is disposed in the first hole part (31 a, 31 b) of the block (31) and capable of generating variable load pressure according to a vehicle load; and
relay valves (22) that are disposed in the two second hole parts (31 c, 31 c) of the block (31) respectively and capable of generating brake pressure on the basis of control pressure generated according to the variable load pressure,
wherein the first hole part (31 a, 31 b) extends from a front surface of the block (31) toward a back surface of the block (31),
wherein the two second hole parts (31 c, 31 c) are formed as to extend vertically,
wherein the relay valves (22) respectively have pistons (22e) and diaphragms (22f) that are disposed so as to project laterally from the pistons (22e) and supporting the pistons (22e) while allowing the piston (22e) to reciprocate,
the two relay valves (22, 22) disposed in the two second hole parts (31c, 31 c) are disposed in horizontal alignment with a space therebetween such that the diaphragms (22f) thereof are mutually adjacent, and
the variable load valve (21) disposed in the first hole part (31 a, 31 b) is disposed in a position between the two pistons (22e, 22e) and away from a position where the diaphragms (22f) are mutually adjacent and is disposed at a level between highest parts of the relay valves (22) and the diaphragms (22f).

2. The brake pressure control valve according to claim 1, wherein
the variable load valve (21) has a pressure regulating valve (60) with a pressure adjusting part (60f), and an output valve (61) with a pressure adjusting part (61 f),
both of the two relay valves (22, 22) are placed such that the pistons (22e) thereof reciprocate in a vertical direction, and
the variable load valve (21) is placed such that the pressure adjusting parts (60f, 61 f) face forward.

3. The brake pressure control valve according to claim 1 or 2, wherein
a third hole part (31 d) is further formed in the block (31),
a forced open valve (23), which can be activated to block the brake pressure generated by the operation of the relay valves (22, 22) and to release air of a brake cylinder to the outside, is disposed in the third hole part (31 d), and
the forced open valve (23) is disposed in a position located laterally with respect to the relay valves (22, 22) and disposed in a position between highest parts of the relay valves (22, 22) and the diaphragms (22f).

4. A brake control device, comprising:
a casing (11);
a brake pressure control valve (20) of any one of claims 1 to 3, which is placed inside the casing (11); and
a control board (28) capable of controlling the brake pressure control valve (20).

5. The brake control device according to claim 4, further comprising;
a cannon connector (18) that is provided in the casing (11) and connects a wire provided outside the casing (11);
a wiring board (27) that is placed inside the casing (11) and connected to an inner side part of the cannon connector (18); and
a connector (29) for electrically connecting the wiring board (27) and the control board (28) to each other,
wherein the control board (28) is provided in the casing (11), separately from the wiring board (27).

6. The brake control device according to claim 5, wherein
the control board (28) is provided in plurality,
an attachment frame body (35), which has retaining parts capable of retaining the control boards (28), is provided inside the casing (11) so as to be detachable with respect to the casing (11), and
openings into which the control boards (28) can be inserted are formed in a near side section and deep side section of the attachment frame body (35).

7. The brake control device according to claim 6, further comprising:
a frame body attachment member (43) for positioning the attachment frame body (35) in a predetermined position inside the casing (11); and
a guide part (44) for guiding the attachment frame body (35) to a predetermined position with respect to the frame body attachment member (43).

8. The brake control device according to claim 7, wherein
the cannon connector (18) is placed on a side wall of the casing (11),
the wiring board (27) has a first board (27a), which is placed along the side wall and connected to the inner side part of the cannon connector (18), and a second board (27b), which is electrically connected to the first board (27a), provided with the connector (29), and disposed on the deep side of the attachment frame body (35), and
a fixing part (36, 37) for fixing the attachment frame body (35) to the casing (11) and the guide part (44) are disposed between the attachment frame body (35) and the first board (27a).

9. The brake control device according to claim 7 or 8, wherein
the inside of the casing (11) is provided with a tube seat (14) which connects an air pipe line provided outside the casing (11) to the brake pressure control valve (20) placed inside the casing (11), and
at least a part of the second board (27b) is positioned on the same plane as the tube seat (14).

10. The brake control device according to claim 9, wherein
the tube seat (14) is disposed below the control board (28), and
the block (31) of the brake pressure control valve (20) is disposed on a near side of the tube seat (14).

11. The brake control device according to any one of claims 6 to 10, further comprising anti-falling off means (41) for preventing each of the control boards (28) from falling off the attachment frame body (35).

12. The brake control device according to any one of claims 6 to 11, wherein the plurality of control boards (28) are arrayed in a vertical direction, and the control board (28) that is disposed at the top has a power circuit configured therein.

13. The brake control device according to any one of claims 6 to 12, wherein electronic components are assigned to the plurality of control boards (28) such that the electronic components having the same operating life are mounted in the same control boards (28).

## Patentansprüche

1. Bremsendrucksteuerungsventil, das umfasst:
einen Block (31), in dem wenigstens ein erster Lochteil (31a, 31 b) und zwei zweite Lochteile (31 c, 31 c) ausgebildet sind;
ein Ventil (21) mit variabler Last, das in dem ersten Lochteil (31a, 31 b) des Blocks (31) angeordnet ist und fähig ist, gemäß einer Fahrzeuglast einen variablen Lastdruck zu erzeugen; und
Relaisventile (22), die jeweils in den zwei zweiten Lochteilen (31 c, 31 c) des Blocks (31) angeordnet sind und fähig sind, auf der Basis des Steuerdrucks gemäß dem variablen Lastdruck einen Bremsdruck zu erzeugen,
wobei der erste Lochteil (31a, 31b) sich von einer Vorderfläche des Blocks (31) in Richtung einer Rückfläche des Blocks (31) erstreckt,
wobei die zwei zweiten Lochteile (31 c, 31 c) derart ausgebildet sind, dass sie sich vertikal erstrecken,
wobei die Relaisventile (22) jeweils Kolben (22e) und Membranen (22f) haben, die derart angeordnet sind, dass sie seitlich von den Kolben (22e) vorstehen und die Kolben (22e) halten, während sie zulassen, dass der Kolben (22e) sich hin und her bewegt,
wobei die zwei Relaisventile (22, 22), die in den zwei zweiten Lochteilen (31c, 31c) angeordnet sind, in einer horizontalen Ausrichtung mit einem Raum dazwischen angeordnet sind, so dass ihre Membranen (22f) aneinander angrenzend sind, und
wobei das Ventil (21) mit variabler Last, das in dem ersten Lochteil (31a, 31 b) angeordnet ist, in einer Position zwischen den zwei Kolben (22e, 22e) und weg von einer Position, in der die Membranen (22) aneinander angrenzend sind, auf einer Höhe zwischen höchsten Teilen der Relaisventile (22) und der Membranen (22f) angeordnet ist.

2. Bremsendrucksteuerungsventil nach Anspruch 1, wobei
das Ventil (21) mit variabler Last ein Druckregelungsventil (60) mit einem Druckeinstellteil (60f) und ein Ausgangsventil (61) mit einem Druckeinstellteil (61f) hat,
beide der zwei Relaisventile (22, 22) derart angeordnet sind, dass ihre Kolben (22e) sich in einer Vertikalrichtung hin und her bewegen, und
das Ventil (21) mit variabler Last derart angeordnet ist, dass die Druckeinstellteile (60f, 61f) nach vorn gewandt sind.

3. Bremsendrucksteuerungsventil nach Anspruch 1 oder 2, wobei
ferner ein dritter Lochteil (31d) in dem Block (31) ausgebildet ist,
ein mit Kraft geöffnetes Ventil (23), das betätigt werden kann, um den durch den Betrieb der Relaisventile (22, 22) erzeugten Bremsendruck zu blockieren und Luft eines Bremszylinders nach außen freizusetzen, in dem dritten Lochteil (31d) angeordnet ist, und
das mit Kraft geöffnete Ventil (23) in einer Position angeordnet ist, die in Bezug auf die Relaisventile (22, 22) seitlich angeordnet ist und in einer Position zwischen höchsten Teilen der Relaisventile (22, 22) und der Membranen (22f) angeordnet ist.

4. Bremsensteuervorrichtung, die umfasst:
ein Gehäuse (11);
ein Bremsendrucksteuerungsventil (20) nach einem der Ansprüche 1 bis 3, das im Inneren des Gehäuses (11) angeordnet ist; und
eine Steuerplatine (28), die fähig ist, das Bremsendrucksteuerungsventil (20) zu steuern.

5. Bremsensteuervorrichtung nach Anspruch 4, die ferner umfasst:
einen Cannon-Stecker (18), der in dem Gehäuse (11) bereitgestellt ist und einen außerhalb des Gehäuses (11) bereitgestellten Draht verbindet;
eine Verdrahtungsplatine (27), die im Inneren des Gehäuses (11) angeordnet ist und mit einem inneren Seitenteil des Cannon-Steckers (18) verbunden ist; und
einen Verbinder (29) zum elektrischen Verbinden der Verdrahtungsplatine (27) und der Steuerplatine (28) miteinander,
wobei die Steuerplatine (28) in dem Gehäuse (11) getrennt von der Verdrahtungsplatine (27) bereitgestellt ist.

6. Bremsensteuervorrichtung nach Anspruch 5, wobei
die Steuerplatine (28) mehrfach bereitgestellt ist,
ein Befestigungsrahmenkörper (35), der Festhalteteile hat, die fähig sind, die Steuerplatinen (28) festzuhalten, im Inneren des Gehäuses (11) bereitgestellt ist, um in Bezug auf das Gehäuse (11) abnehmbar zu sein, und
Öffnungen, in welche die Steuerplatinen (28) eingesetzt werden können, in einem nahen Seitenabschnitt und einem tiefen Seitenabschnitt des Befestigungsrahmenkörpers (35) ausgebildet sind.

7. Bremsensteuervorrichtung nach Anspruch 6, die ferner umfasst:
ein Rahmenkörperbefestigungselement (43) zum Positionieren des Befestigungsrahmenkörpers (35) in einer vorgegebenen Position im Inneren des Gehäuses (11); und
einen Führungsteil (44) zum Führen des Befestigungsrahmenkörpers (35) zu einer vorgegebenen Position in Bezug auf das Rahmenkörperbefestigungselement (43).

8. Bremsensteuervorrichtung nach Anspruch 7, wobei
der Cannon-Stecker (18) auf einer Seitenwand des Gehäuses (11) angeordnet ist,
die Verdrahtungsplatine (27) eine erste Platine (27a), die entlang der Seitenwand angeordnet ist und mit dem Innenseitenteil des Cannon-Steckers (18) verbunden ist, und eine zweite Platine (27b) hat, die mit der ersten Platine (27a) elektrisch verbunden ist, welche mit dem Verbinder (29) versehen ist und auf der tiefen Seite des Befestigungsrahmenkörpers (35) angeordnet ist, und
einen Fixierungsteil (36, 37) zum Fixieren des Befestigungsrahmenkörpers (35) an dem Gehäuse (11) und der Führungsteil (44) zwischen dem Befestigungsrahmenkörper (35) und der ersten Platine (27a) angeordnet sind.

9. Bremsensteuervorrichtung nach Anspruch 7 oder 8, wobei
das Innere des Gehäuses (11) mit einem Rohrlauflager (14) versehen ist, das eine Luftrohrleitung, die außerhalb des Gehäuses (11) bereitgestellt ist, mit dem Bremsensteuerungsventil (20) verbindet, das in dem Gehäuse (11) angeordnet ist, und
wenigstens ein Teil der zweiten Platine (27b) auf der gleichen Ebene wie das Rohrauflager (14) positioniert ist.

10. Bremsensteuervorrichtung nach Anspruch 9, wobei
das Rohrauflager (14) unterhalb der Steuerplatine (28) angeordnet ist, und
der Block (31) des Bremsensteuerungsventils (20) auf einer nahen Seite des Rohrauflagers (14) angeordnet ist.

11. Bremsensteuervorrichtung nach einem der Ansprüche 8 bis 10, die ferner Abfallschutzmittel (41) umfasst, um zu verhindern, dass jede der Steuerplatinen (28) von dem Befestigungsrahmenkörper (35) abfällt.

12. Bremsensteuervorrichtung nach einem der Ansprüche 6 bis 11, wobei die mehreren Steuerplatinen (28) in einer Vertikalrichtung angeordnet sind, und die Steuerplatine (28), die oben angeordnet ist, eine Leistungsschaltung darin aufgebaut hat.

13. Bremsensteuervorrichtung nach einem der Ansprüche 6 bis 12, wobei der Vielzahl von Steuerplatinen (28) elektronische Komponenten zugeordnet sind, so dass die elektronischen Komponenten, die die gleiche Betriebslebensdauer haben, in den gleichen Steuerplatinen (28) montiert sind.

## Revendications

1. Vanne de régulation de pression de freinage, comprenant :
un bloc (31) dans lequel sont formées au moins une première partie de trou (31a, 31b) et deux deuxièmes parties de trou (31c, 31c) ;
une vanne à charge variable (21) qui est disposée dans la première partie de trou (31a, 31b) du bloc (31) et capable de générer une pression de charge variable en fonction d'une charge du véhicule ; et
des vannes relais (22) qui sont respectivement disposées dans les deux deuxièmes parties de trou (31c, 31c) du bloc (31) et capables de générer une pression de freinage sur base d'une pression de commande générée en fonction de la pression de charge variable,
dans laquelle la première partie de trou (31a, 31b) s'étend depuis une surface avant du bloc (31) vers une surface arrière du bloc (31),
dans laquelle les deux deuxièmes parties de trou (31c, 31 c) sont formées de manière à s'étendre verticalement,
dans laquelle les vannes relais (22) comportent respectivement des pistons (22e) et des diaphragmes (22f) qui sont disposés de manière à se projeter latéralement depuis les pistons (22e) et supportant les pistons (22e) tout en permettant aux pistons (22e) d'effectuer un mouvement de va-et-vient,
les deux vannes relais (22, 22) disposées dans les deux deuxièmes parties de trou (31c, 31c) sont disposées en alignement horizontal avec un espace entre elles de telle sorte que leurs diaphragmes (22f) sont mutuellement adjacents, et
la vanne à charge variable (21) disposée dans la première partie de trou (31a, 31b) est disposée dans une position entre les deux pistons (22e, 22e) et éloignée d'une position où les diaphragmes (22f) sont mutuellement adjacents, et est disposée à un niveau compris entre les parties les plus hautes des vannes relais (22) et les diaphragmes (22f).

2. Vanne de régulation de pression de freinage selon la revendication 1, dans laquelle
la vanne à charge variable (21) comporte une vanne de régulation de pression (60) avec une partie de réglage de pression (60f), et une vanne de sortie (61) avec une partie de réglage de pression (61f),
les deux vannes relais (22, 22) sont agencées de telle sorte que leurs pistons (22e) effectuent un va-et-vient en direction verticale, et
la vanne à charge variable (21) est placée de telle sorte que les parties de réglage de pression (60f, 61f) sont tournées vers l'avant.

3. Vanne de régulation de pression de freinage selon la revendication 1 ou 2, dans laquelle
une troisième partie de trou (31d) est en outre formée dans le bloc (31),
une vanne ouverte par force (23), qui peut être activée pour bloquer la pression de freinage générée par l'actionnement des vannes relais (22, 22) et pour libérer de l'air d'un cylindre de frein vers l'extérieur, est disposée dans la troisième partie de trou (31d), et
la vanne ouverte par force (23) est disposée dans une position située latéralement par rapport aux vannes relais (22, 22) et est disposée dans une position comprise entre les parties les plus hautes des vannes relais (22, 22) et les diaphragmes (22f).

4. Dispositif de commande de freinage, comprenant :
un boîtier (11) ;
une vanne de régulation de pression de freinage (20) selon l'une quelconque des revendications 1 à 3, qui est placée à l'intérieur du boîtier (11) ; et
une carte de commande (28) capable de commander la vanne de régulation de pression de freinage (20).

5. Dispositif de commande de freinage selon la revendication 4, comprenant en outre :
un connecteur XLR (18) qui est pourvu dans le boîtier (11) et qui connecte un fil pourvu à l'extérieur du boîtier (11) ;
une carte de câblage (27) qui est placée à l'intérieur du boîtier (11) et connectée à une partie latérale interne du connecteur XLR (18) ; et
un connecteur (29) pour connecter électriquement entre elles la carte de câblage (27) et la carte de commande (28),
dans lequel la carte de commande (28) est pourvue dans le boîtier (11), séparément de la carte de câblage (27).

6. Dispositif de commande de freinage selon la revendication 5, dans lequel
la carte de commande (28) est pourvue sous forme d'une pluralité de cartes,
un corps de bâti d'attachement (35), qui comporte des parties de rétention capables de retenir les cartes de commande (28), est pourvu à l'intérieur du boîtier (11) de manière à être détachable par rapport au boîtier (11), et
des ouvertures dans lesquelles peuvent être insérées les cartes de commande (28) sont formées dans une section côté proche et une section côté profond du corps de bâti d'attachement (35).

7. Dispositif de commande de freinage selon la revendication 6, comprenant en outre :
un élément d'attachement du corps de bâti (43) pour positionner le corps de bâti d'attachement (35) dans une position prédéterminée à l'intérieur du boîtier (11) ; et
une partie de guidage (44) pour guider le corps de bâti d'attachement (35) vers une position prédéterminée par rapport à l'élément d'attachement du corps de bâti (43).

8. Dispositif de commande de freinage selon la revendication 7, dans lequel
le connecteur XLR (18) est placé sur une paroi latérale du boîtier (11),
la carte de câblage (27) comporte une première carte (27a) qui est placée le long de la paroi latérale et connectée à la partie latérale interne du connecteur XLR (18), et une deuxième carte (27b), qui est connectée électriquement à la première carte (27a), pourvue du connecteur (29) et disposée sur le côté profond du corps de bâti d'attachement (35), et
une partie de fixation (36, 37) pour fixer le corps de bâti d'attachement (35) au boîtier (11) et la partie de guidage (44) sont disposées entre le corps de bâti d'attachement (35) et la première carte (27a).

9. Dispositif de commande de freinage selon la revendication 7 ou 8, dans lequel
l'intérieur du boîtier (11) est pourvu d'un siège de tube (14) qui connecte une ligne de tuyau d'air pourvue à l'extérieur du boîtier (11) à la vanne de régulation de pression de freinage (20) placée à l'intérieur du boîtier (11), et
au moins une partie de la deuxième carte (27b) est positionnée dans le même plan que le siège de tube (14).

10. Dispositif de commande de freinage selon la revendication 9, dans lequel
le siège de tube (14) est disposé sous la carte de commande (28), et
le bloc (31) de la vanne de régulation de pression de freinage (20) est disposé sur un côté proche du siège de tube (14).

11. Dispositif de commande de freinage selon l'une quelconque des revendications 6 à 10, comprenant en outre un moyen de prévention de chute (41) pour éviter que chacune des cartes de commande (28) ne tombe du corps de bâti d'attachement (35).

12. Dispositif de commande de freinage selon l'une quelconque des revendications 6 à 11, dans lequel les cartes de la pluralité de cartes de commande (28) sont agencées selon un réseau en direction verticale, et un circuit d'alimentation est configuré dans la carte de commande (28) qui est disposée au sommet.

13. Dispositif de commande de freinage selon l'une quelconque des revendications 6 à 12, dans lequel des composants électroniques sont attribués à la pluralité de cartes de commande (28) de telle sorte que les composants électroniques ayant la même durée de vie sont montés dans les mêmes cartes de commande (28).
